# EUROPEAN PATENT APPLICATION

(11) **EP 1 694 071 A1**
(43) Date of publication of application: **23.08.2006**
(21) Application number: 06250743.9
(22) Date of filing: 10.02.2006
(51) Int. Cl.: H04N 7/173, H04N 7/24

(54) **Interactive video applications**

(30) Priority: 11.02.2005 GB 0502811; 11.02.2005 GB 0502810; 11.02.2005 GB 0502808
(71) Applicant: Vemotion Limited, Thirsk North Yorkshire YO7 3BX (GB)
(72) Inventor: Antoniou, Tony, Woodford Kettering NN14 4EY (GB); Howarth, Geoffrey, YO7 1RY (GB); McCone, Stewart, North Allerton North Yorkshire DL6 2LY (GB); McLean, Stewart, TS25 2RH (GB)
(74) Representative: Alton, Andrew

(57) **Abstract**

An interactive video platform, interactive video player and computer implemented methods are described, for providing interactive live video, recorded video or video based games on a user device, such as a mobile phone. Encoded video from a source of video is sent over a network to the user device. A control command is received from the communication device over the network. A control file associated with the video being sent is read to determine an action to be carried out in response to the control command received. The action is carried out to control the video so as to change the video to be displayed to the user.

## Description

The present invention relates to an interactive video platform, and in particular to providing user interaction with video displayed on a user device.

Video images can be displayed on user devices remote from the source of the video. However, typically the video images are of low quality owing to the limited bandwidth available for supplying the video to the device. This can be a particular problem with wireless cellular networks, such as mobile telephone networks, where bandwidth can be particularly scarce.

For example, a remote viewing device can connect directly to a streaming server which can stream video content which is either static video content from a pre-recorded encoded video file, or live video content from an encoder taking input from a video camera.

However, some users require interactive functionality to be provided with the associated video images. However, including interactive functionalities requires some of the bandwidth of the network or be sacrificed to control and/or data signals. This can further degrade the video quality experienced by the end user.

It would therefore be advantageous to be able to provide video to remote users which includes interactive functionalities and without significantly degrading the video delivered to the user. This can be used in a wide range of applications, such as, for example, live video, recorded video content or video based games.

According to a first aspect of the present invention, there is provided a computer implemented method for providing interactive live video on a user device. Video can be sent over a network to the user device, the video being from a source of live video. A control command can be received from the communication device. A control file associated with the live video can be read to determine an action to be carried out in response to the control command received. The action can be caused to be carried out to control the source of live video so as to change the video displayed to the user. Live video can be sent to the user device, being different to the live video initially being sent.

Hence, control commands or control data received from the user device can be used to control properties of the live video being displayed to the user thereby allowing the user to interact with the live video being displayed.

Then user device can be a mobile communication device or a cellular communication device, such as a mobile telephone, smart phone or hybrid device, such as a PDA including telephony. At least a part of the network can be a cellular communications network, such as a mobile telephone network.

The video can be sent as compressed video. This reduces the amount of data sent over the network. Preferably a H.264 codec is used to compress and/or decompress the video data sent over the network.

The property changed can be an aspect of how the live video is captured. Hence, the user can control how the live video is captured so as to change the displayed video. Any aspect of the video can be controlled, such as the direction of view, the field of view or the zoom. Hence, the user can zoom in and out and/or pan to select the images to be displayed.

The property changed can be the source of live video. Hence, the user can select to view live video from a different source. The source can be any source of live video, such as a video camera, an encoder or a live television channel feed.

The control command or control data can include a key pressed by a user of the user device and/or a time at which the key was pressed by the user of the user device. Preferably the only control command or data is the key pressed and or the time at which the key was pressed. Hence, a minimal amount of data needs to be transferred over the network thereby reducing the amount of bandwidth required to provide full user interaction.

The can further comprise sending a message to the user device. The message can define a message content and/or a message format. The message format can be the format of a user interface entity to be displayed by the user device. The message can be a simple textual or alphanumeric string defining both the message content and the message formatting. The string can be read and interpreted by the user device to actually display the message. Hence, as the amount of data transmitted over the network to provide full user interaction is low and therefore does not use significant bandwidth.

The method of claim can further comprise receiving a command from the user. The command can be response to a user interface entity displayed on the user device. An action can be carried out action dependent on the command received.

The method can further comprise controlling the live video source connected to an encoder for encoding the live video. The live video source can be controlled to control an aspect of the live video source itself and/or the live video source can be control to select a different live video source. Hence, rather than connecting to a different device which sends the video data, as aspect of the feed to an encoder attached to the device is changed to select different live video and/or control how the live video is being captured.

The live video can be a live television feed. The live television feed can be selected from a plurality of different live television feeds. The live television feeds can be supplied by a television network or a plurality of different television networks.

According to a further aspect of the invention, there is provided a computer implemented method for displaying interactive live video on a user device. Video can be received over a network at the user device, the video being from a source of live video. A control command can be sent from the communication device to control the source of live video so as to change a property of the video to be displayed. The control command can identifying an action to be carried out as specified in a control file associated with the video. Live video can be received over the network at the user device. The live video displayed can be different to the live video initially being sent to the user device.

Hence, the user can enter control commands or control instructions to change or control the live video being displayed on their user device.

The property can be an aspect of the video being displayed. Hence, the user can control how the live video currently being displayed is displayed to the user. The property can be any aspect of how the video images are displayed. For example, the user can control the zoom, the direction or the field of view of the images being displayed.

The property can be the source of live video to be displayed. Hence, the user can select to view live video from a different source.

The control command or control data can includes a key pressed by the user and/or the time at which the key was pressed by the user. Preferably, the control command or control data includes the key pressed by the user and/or the time at which the key was pressed only. This reduces the amount of control data sent over the network thereby maintaining much of the network bandwidth for the transmission of video data.

According to a further aspect of the invention, there is provided an interactive video platform for providing interactive live video on a user device over a network. The interactive video platform can be configured by computer program code to: send video over a network to the user device from a source of live video; receive a control command from the communication device; read a control file associated with the live video to determine an action to be carried out in response to the control command received; cause the action to be carried out to change a property of the live video to be displayed to the user; and send video over the network to the user device, the video being different to the live video initially being sent to the user device.

The platform can further comprising a streaming server or streaming servers in communication with the network for streaming live video data over the network. The live video data can be encoded live video data. Each streaming server can include an encoder for encoding a live video feed. Preferably, the encoder comprises a H.264 codec.

The platform can further comprise a source or sources of live video content. The source, or sources, of live video content can be a video camera. The source or sources of live video content can be a live television feed.

The platform can further comprise a control file for each different type of live video or item of live video. A first control file can be provided for a first type of live video, e.g. from a video camera, and a second control file can be provided for a second type of live video, e.g. a television channel feed. In the latter case, no control of how the video is displayed may be possible and so the control file can allow the user to select different channels and/or interact with user interface entities. In the former case, the control file can also additionally allow the user to control the camera and therefore different types of control files can be required for different types of live video feed. Even for the same type of video feed, different items of live video may require different types of control file. For example, for television feeds from different channels, some channels may provide merchandising opportunities, such as a music channel, whereas other channels may provide different interaction opportunities, such as a gambling or auction channel. Therefore, the control files for different items of video content of the same type may need to be different to provide the interaction appropriate for the item of video content.

According to a further aspect of the invention, there is provided a user communication device for displaying interactive live video. The device can comprise a display and an interactive video player. The video player can be implemented by a data processor configured by computer program code to: receive video over a network at the user device from a source of live video; send a control command from the communication device to control the source of live video so as to change a property of the video to be displayed to the user. The control command can identify an action to be carried out as specified in a control file associated with the received video. The computer program code can further configure the video player to receive video at the user device, and display live video different to the live video initially being sent to the user device.

According to a first aspect of the present invention, there is provided a computer implemented method for providing interactive video on a user device. An item of recorded video content to be displayed can be identified. A control file associated with the item of recorded video content can be determined. A control command can be received from the user device. The control command can control a property of the video to be displayed on the user device. The control file can be read to determine an action to carry out to control the video based on the control command received. The action can be caused to be carried out so as to control the property of the recorded video.

Hence, control commands or control data received from the user device can be used to control properties of the recorded video item being displayed to the user thereby allowing the user to interact with the recorded video being displayed.

Then user device can be a mobile communication device or a cellular communication device, such as a mobile telephone, smart phone or hybrid device, such as a PDA including telephony. At least a part of the network can be a cellular communications network, such as a mobile telephone network.

The video can be sent as compressed video data. This reduces the amount of data sent over the network. The video data can be compressed or decompressed using a H.264 codec.

The method can further comprise notifying the user device of a source of the item of recorded video content to be displayed. Hence, the user device can connect to a more appropriate source of video content so as to improve the streaming service.

The control command or control data can include a key press data item corresponding to a key pressed by the user and/or a key press time data item corresponding to the time during display of the video at which a key was pressed by the user. Preferably, the control command or control data comprises a key press data item and/or a key press time data item only. Hence, little data needs to be sent over the network so as to allow interaction of the user with the displayed video.

The property of the video to be displayed can be how the recorded video currently being displayed is displayed on the user device. Hence, the user can control how the current video item is being displayed. Any aspect or property of how the video item is displayed may be controlled. For example, the property can be playing the video, pausing the video, stopping the video, forwarding the video and/or reversing or rewinding the video.

The property of the video can be selecting a different item of recorded video content to be displayed. Hence, the user can select to display a different item of recorded video on their user device.

The method can further comprise reading the control file to determine at a time during display of the video to send a message to the user device. The message can be sent to the user device at the time. Hence, messages appropriate to the current context of the displayed video can be displayed on the user device.

The method can further comprise sending a message to the user device. The message can include a message body. The message can also include formatting data specifying how a message body should be displayed. The message can define a message content and/or a message format. The message format can be the format of a user interface entity to be displayed by the user device. The message can be a simple textual or alphanumeric string defining both the message content and the message formatting. The string can be read and interpreted by the user device to actually display the message. Hence, as the amount of data transmitted over the network to provide full user interaction is low and therefore does not use significant bandwidth.

The message can specifies a user interface entity to be displayed on the user device. Displayed user interface entities can provide information to the user or can provide options which the user can select. A user can enter input data or select an option in response to a displayed user interface entity.

The message can be a part of a dialogue. The control file can specify what subsequent messages to send during the dialogue dependent on received user input. Hence, a sequence of messages can be displayed to a user, in which the sequence is determined by the user inputs at each step of the sequence and the control file.

The method can further comprise determining the type of the action. If the action is an action that can be carried out by a native routine of a control process, then the native routine can carry out the action. The location of a routine which can carry out the action can be determined and the routine can be called to carry out the action. Parameters can be passed to the routine in order to allow it to carry out the required action. Hence, new functionalities can be developed and supported, or the method can be customised for a specific application, without having to re-write parts of the main control process.

The control file can have a first section specifying rules that are applied to send messages to the user device. The control file can have a second section specifying rules that are applied in handling user inputs received from the user device. Hence a single control file can be used by different devices to handle different aspects of the method.

The method can further comprise determining which of a plurality of video sources should act as the source of the recorded video content to be sent to the user device. Connection data can be sent to the user device identifying the address of the video source to which the user device should connect over a network. The connection data can include an IP address and/or a port number.

The method cam further include identifying a selected file of encoded video from a plurality of files of encoded video. The selected file of encoded video can be transferred to a video source for transmission to the user device. Identifying the selected file can include searching a database which includes records if all the items of recorded video content that can be supplied.

Determining can further comprise selecting a video source being most likely to provide the highest quality service of the video content to the user device. Selecting can further comprise determining whether all video sources have access to the item of video content. If so, then the video source having a quality of service metric exceeding a threshold and being local to the user device can be selected, else the video source having a highest quality of service metric but not being local to the user device can be selected. If not, then the video source having a highest quality of service metric can be selected.

The method can further comprise making the control file available to the video source acting as the source of the video content to be sent to the user device. In this way the video source can also act to control the video being displayed on the user device.

The method can further comprise communicating with the user device to determine the rate at which the device is consuming video data, and controlling the rate at which video data is being sent to the device. This can help to reduce delays in switching between items of video data being displayed owing to video data buffering by the communications network.

The method can further comprise sending a command or message to the user device instructing the user device to clear its internal buffers. The message can be sent after receiving a command to switch to a different item of video content. The message can be sent before starting to send video data for a new item of video content to the user device. This can help to reduce delays in changing the video content being displayed on the user device, owing to excessive internal buffering of video data in the user device as the user device can download video data faster than the video data can be displayed.

According to a further aspect of the invention, there is provided a computer implemented method for displaying interactive video on a user communication device. Video data can be received from a source of recorded video content over a network. The video content can be displayed. A control command or control data can be sent from the communication device to control a property of the video. The control command can identify an action to be carried out as specified in a control file associated with the video being received. Video can then be displayed having the property controlled as specified by the sent control command or data.

The property can be an aspect of how the video content is being displayed. Hence, the user can control how the current item of video content is being displayed to the user.

The property can be the item of video content to be displayed on the user device. Hence, the user can control what item of video content to display on the device.

The method can further comprising displaying a user interface entity. The user interface entity can be displayed with the video being displayed.

The method can further comprise receiving user key press input responsive to the user interface entity. User input data including at least the key press data and/or an alphanumeric string can be sent to a controller.

The method can further comprise receiving connection data over the network identifying the source of video content. The user device can connect to the source of video content over the network, using the connection data. The connection data can include an IP address and/or a port number.

The method can further comprise the user device receiving a command or message to clear a video buffer and clearing video data from the video data. Video data for a new item of video content can then be more rapidly displayed, rather than having to wait until the video data for the previous video content has been displayed. The command can be received before video data for a new item of video content starts to be received. The command can be received after having sent a command selecting a different item of video content to view.

According to a further aspect of the invention, there is provided an interactive video platform for providing interactive video on a user device over a network. The interactive video platform can be configured by computer program code to: identify recorded video content to be displayed on the user device; determine a control file associated with the recorded video content; receive a control command from the user device, the control command controlling a property of the video; read the control file to determine an action to carry out to control the video based on the control command received; and cause the action to be carried out so as to control the property of the recorded video on the user device.

The platform can further comprise a plurality of streaming servers in communication with the network for streaming encoded video data over the network.

The platform can further comprise a store of a plurality of different items of recorded encoded video content.

The platform can further comprising a control file for each different item of video content.

Some of the plurality of streaming servers can be local to a control server and the rest can be not local to the control server.

Each streaming server can have access to the control files associated with the items of video content that an individual streaming server can supply.

According to a further aspect of the invention, there is provided a user communication device for displaying interactive video. The user communication device can comprise a display and an interactive video player. The interactive video player can be implemented by a data processor configured by computer program code to: receive video data from a source of recorded video content over a network; display the video content; send a control command or control data from the communication device to control a property of the video to be displayed to the user. The control command can identify an action to be carried out as specified in a control file associated with the video. The computer program code can further configure the processor to display video having the property controlled as specified by the sent control command or data.

According to a further aspect of the present invention, there is provided a computer implemented method for providing an interactive game including live video on a user device. Video can be sent from a source of video to the user device. A control command or control data cane be received from the communication device. The control command or control data can be for controlling a game being played on the user device. A control file associated with the video being sent can be read to determine an action to be carried out. The action can be caused to be carried out to control the game. Further video including the effect of the control command on the game can then be sent to the device.

Hence, control commands or control data received from the user device can be used to control a game which includes video being displayed on the users device thereby allowing the user to interact with the game and the video being displayed.

Then user device can be a mobile communication device or a cellular communication device, such as a mobile telephone, smart phone or hybrid device, such as a PDA including telephony. The video and/or control command or data can be sent over a network. At least a part of the network can be a cellular communications network, such as a mobile telephone network.

The video can be sent as compressed video. This reduces the amount of data sent over the network. Preferably a H.264 codec is used to compress and/or decompress the video data sent over the network.

The control command can control the source of live video. Hence, the user can control what images are being displayed on the user device. For example, the user can control how the video images are displayed. The control command can change a number of properties or aspects of the source of live video. Any property affecting the images being displayed can be controlled, for example, the direction of view, the field of view and/or the zoom.

The user can select a different source of video images. For example, the user can control a property of the camera, such as its field of view, the direction of its field of view or the zoom. The user can also select to use a different one of a plurality of cameras to provide the video images being displayed on the user device. Hence, the user can select a different view for the same or different parts of a game or can select different cameras for the same or different parts of the game.

The control command can include a key pressed by a user of the user device and/or a time at which the key was pressed by the user of the user device. Preferably, the control command includes a key pressed and/or a time at which the key was pressed only. In this way the amount of data sent over the network to provide interaction is reduced thereby preserving bandwidth for the video data.

The method can further comprise sending a message to the user device. The message can define the content and/or format of a user interface entity. The message can comprise an alphanumeric string. The string can include data items identifying, the type of user interface entity, the content of the user interface entity and the formatting or appearance of the user interface entity.

The user interface entity can be displayed by the user device during, before or after the game. The user interface entity can allow the user to make selections, enter data or enter commands. The user interface entity can be related to supplying merchandise associated with the game.

The method can further comprise receiving a command from the user. The command can be received in response to a user interface entity. An action can be carried to control the game dependent on the command received. An action can be carried out to provided further interaction which does not control the game. The action can cause further messages to be sent as part of a dialogue.

The method can further comprise receiving a textual, numerical or alphanumeric string from the user device as part of the user interaction with the game. The string can be in addition to key press control data for controlling the game. The textual, numerical or alphanumeric string can be received in response to information being, or having been, displayed in the game.

According to a further aspect of the invention, there is provided a computer implemented method for playing an interactive game including video on a user device. Video can be received from a source of video at the user device. A control command or control data can be sent from the communication device to control the game. The control command or control data can identify an action to be carried out as specified in a control file associated with the video being received. Further video can be received at the user device which includes the effect of the control command on the game.

The control command or control data can cause a property of the video being displayed in the game to be changed. The control command or control data can cause a different source video to be selected for display in the game.

The control command can include a key pressed by the user and/or the time at which the key was pressed by the user. Preferably, the control command or control data includes a key pressed and/or the time at which the key was pressed only.

The method can further comprise receiving a message defining the content and format of a user interface entity. The user interface entity can be displayed before, during or after the game. The message can be an alphanumeric string. The alphanumeric string can include data items specifying the type of user interface entity, properties or attributes of the user interface entity and/or the format or appearance of the user interface entity.

According to a further aspect of the invention, there is provided an interactive video platform for providing an interactive game including video on a user device. The interactive video platform can be configured by computer program code to: send video from a source of video to the user device; receive a control command from the user device to control a game being played on the user device; read a control file associated with the video to determine an action to be carried out in response to the control command received; cause the action to be carried out to control the game; and send further video to the user device which includes the effect of the control command on the game.

The platform can further comprise a streaming server in communication with a network for streaming encoded live video data over the network. The platform can further comprise a source or sources of live video content. The or each source of live video content can be a video camera.

The platform can further comprise a control file for each of a plurality of different types of interactive game. Hence, each different kind of game supported by the platform can have a single control file associated with it.

According to a further aspect of the invention, there is provided a user communication device for playing an interactive game including video. The device can comprise a display and an interactive video player. The interactive video player can be implemented by a data processor configured by computer program code. The computer program code can configure the data processor to: receive video from a source of video at the user device; send a control command or control data from the communication device to control the game. The control command or control data can identify an action to be carried out as specified in a control file associated with the video being received. The data processor can further be configured to receive further video at the user device which includes the effect of the control command on the game.

According to further aspects of the invention, there is provided computer program code executable by a data processing device or devices to provide any of the method, platform or device aspects of the invention. A computer program product, comprising a computer readable medium bearing such computer program code is also provided as an aspect of the invention.

Various embodiments of the invention will now be described, by way of example only, and with reference to the accompanying drawings, in which:
Figure 1 shows a schematic diagram of a platform for delivering interactive video according to a first embodiment of the invention;
Figure 2 shows a high level flow process flow chart illustrating client or user side operations carried out on the platform shown in Figure 1 according to a first embodiment of the invention;
Figure 3 shows a high level process flow chart illustrating server side operations carried out on the platform shown in Figure 1 according to the first embodiment of the invention;
Figure 4 shows a process flow chart illustrating parts of the process illustrated in Figures 2, 20 & 23 in greater detail;
Figure 5 shows a process flow chart illustrating authentication and user registration parts of the process illustrated in Figures 3, 21 & 24 in greater detail;
Figure 6 shows a process flow chart illustrating a payment part of the process illustrated in Figure 5;
Figure 7 shows a process flow chart illustrating a cost information process used by the process illustrated in Figure 6 in greater detail;
Figure 8 shows a process flow chart illustrating a payment process used by the process illustrated in Figure 6 in greater detail;
Figure 9 shows a process flow chart illustrating a referral process part of the process illustrated in Figures 3, 21 & 24 in greater detail;
Figure 10 shows a process flow chart illustrating an interactive control process used by the process illustrated in Figures 3, 21 & 24 in greater detail;
Figure 11 shows a schematic representation of the data structure of a control file according to the invention used by the process illustrated in Figure 10;
Figure 12 shows a process flow chart illustrating operations carried out by a streaming server part of the platform shown in Figures 1, 19 & 22 ;
Figure 13 shows a process flow chart illustrating operations carried out by the player in handling a message from a streaming server;
Figure 14 shows a process flow chart illustrating operations carried out by the control server during a messaging dialogue with the player;
Figure 15 shows a process flow chart illustrating how the control server handles actions in the control file;
Figure 16 shows a process flow chart illustrating in greater detail how the process illustrated in Figure 15 handles non-native actions;
Figure 17 shows a process flow chart illustrating how the control server handles key press user input;
Figure 18 shows a process flow chart illustrating how the control server handles text user input;
Figure 19 shows a schematic diagram of a platform for delivering interactive video according to a second embodiment of the invention;
Figure 20 shows a high level flow process flow chart illustrating client or user side operations carried out on the platform shown in Figure 19 according to a second embodiment of the invention;
Figure 21 shows a high level process flow chart illustrating server side operations carried out on the platform shown in Figure 19 according to the second embodiment of the invention;
Figure 22 shows a schematic diagram of a platform for delivering interactive video according to a third embodiment of the invention;
Figure 23 shows a high level flow process flow chart illustrating client or user side operations carried out on the platform shown in Figure 22 according to the third embodiment of the invention; and
Figure 24 shows a high level process flow chart illustrating server side operations carried out on the platform shown in Figure 22 according to the third embodiment of the invention.

### Similar items in different Figures share common reference numerals unless indicated otherwise.

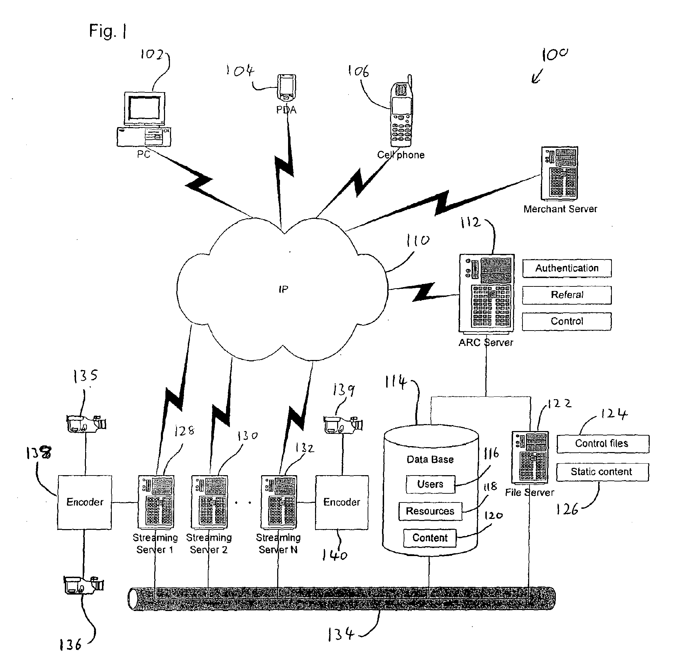

Figure 1 shows a schematic block diagram of an interactive video platform 100 according to a first embodiment of the invention, including client side and server side devices and processes also according to the invention. A plurality of different types of user communications devices can be used on the platform, including, for example, a personal computer 102, a personal digital assistant (PDA) 104, or a cellular telephone 106. All that is required is that the communication device has an IP address and has sufficient data processing power to be capable of executing a player application. The player application can display video and can obtain key press information from a keypad, keyboard, screen or other input part of the device. The user communication devices 102,104,106 can connect to the Internet 110 using any suitable connectivity technology, e.g. via PSTN, Wi-Fi or GPRS.

In the following, the description will focus on an embodiment in which the user's communication device is a cellular or mobile telephone, although, as will be apparent from the above, this is by way of example only and the invention is not limited to application on mobile phones. However, significant benefits are provided by the invention for mobile phones owing to the limited bandwidth available for data transmission on current mobile phone networks.

On the server side of the interactive video platform or system, there is provided a control server 112 in communication with the Internet 110. As will be explained in greater detail below, the control server receives and handles user inputs received from the user device to create user interaction with video being displayed on the user device. Control server can also handle user authentication and referral of the user device to a video source and is generally referred to herein as the ARC server 112, although in other embodiments, any of the authentication, referral and control operations can be distributed over other servers.

During interactive video display, key presses on the user device are passed to a socket on the ARC server using TCP. As illustrated in Figure 1, the ARC server 112 includes modules handling user authentication, video source referral and control of user interaction. In one embodiment, the ARC server is built on the Windows 2000, or higher, operating system, using the .NET run time environment and the authentication, referral and control modules are realised as a Windows service. Windows and .NET are trade marks of Microsoft Corporation. The ARC server also includes libraries of routines or methods ("plugins") which may be required by the system, but which are not native to the ARC server application. The ARC server can dynamically load libraries of machine code written to perform a particular action or operation and run them in the ARC server process.

The ARC server 112 is in communication with a database 114 which has various tables storing data relating to registered users 116 of the interactive video service, the resources 118 available to the ARC server and the video content 120 available for streaming to end users. The ARC server is also in communication with a file server 122 which stores a control file 124 for each piece of video content available and can also store files of static (i.e. pre-recorded) video content which has been encoded ready for transmission to an end user. Various video encoding methods can be used and in one embodiment an H.264 codec is used to encode the video to be stored.

The ARC server 112, database 114 and file server 122 are also in communication with a plurality of streaming servers 128, 130, 132, 1 to N, over a local network 134. Each streaming server includes a video streaming application on an operating system and is in communication with the database 114 and the file server 122. In the illustrated embodiment, the streaming servers are local to the ARC server. However, in other embodiments, some or all of the streaming servers can be remote to the ARC server, database and file server and can simply communicate with the database and file server over a network. Hence, in some embodiments, groups of streaming servers are located in different geographic regions, e.g. US, Europe, Asia, Africa, so as to provide content to local users.

The streaming servers can provide live feeds of video content. Streaming server 128 has a first video camera 135 and a second video camera 136 for capturing video content connected via an encoder 138 which uses an H.264 codec to supply the compressed video data to live video streaming server 128. As will be appreciated in practice, the encoder 138 will be implemented in software on streaming server 128. The video camera providing the live video feed to the encoder can be switched so as to allow different live video to be streamed. Also, the video cameras can be controlled, for example, to zoom in or zoom out, or to pan up, down, left or right.

Streaming server 132 also provides a source of live video and has a further video camera 139 attached thereto by a further encoder 140.

Streaming server 130 also acts as a source of live video and receives a live television channel feed over network 134. Although not illustrated in figure 1, a plurality of different television channel feeds can be connected to network 134 and the television data is supplied to streaming server 130 which includes an encoder so as to stream encoded video data from a selected one of the live television channels. Television channels can be switched by simply selecting which of the live television channel feeds is supplied over the network to streaming server 130.

Plugins are provided to execute various plugin modules which can provide on and off platform services. For off platform services, e.g. credit card payments, the plugins can communicate over a network 110, such as the Internet, with a remote service provider, e.g. a merchant server 142, in order to carry out the off platform service.

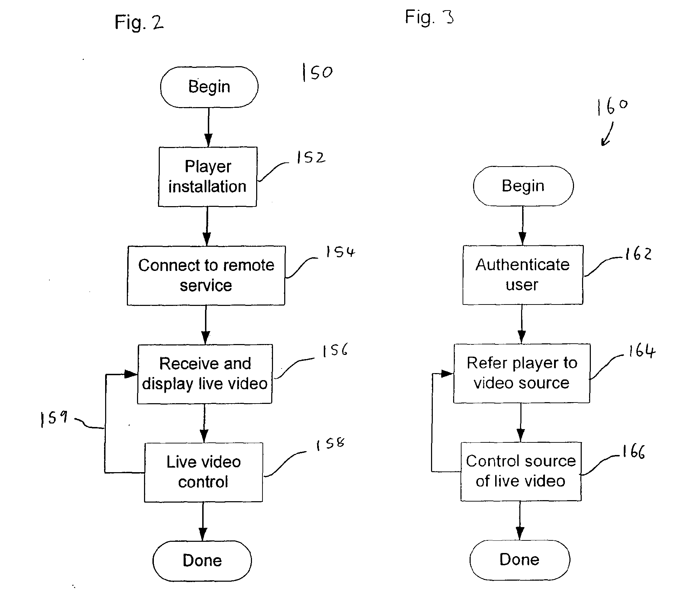

A general overview of the method of operation of the platform will initially be provided, with reference to Figures 2 and 3, before describing the operation of the parts of the platform in greater detail. Figure 2 shows a high level flow chart illustrating various operations carried out during a client or user side process 150 and Figure 3 shows a high level flow chart illustrating various operations carried out by server side processes 160.

If the player is not already installed on the phone, then at step 152 a user installs the player. The phone 106 generally has an operating system including a part for handling basic input and output (BIO) operations and also a part for recognising the type or format of data being received by the phone. The player application sits on the operating system and includes a H.264 codec for decoding video data received by the phone. An API is provided between the player and operating system and the operating system passes received video data and other data to the player and also passes key press data from the devices keyboard or keypad to the player.

The player can be installed on the phone in a number of ways. If the phone includes a web browser, then the player can be downloaded from a url as a binary application file and installed. If the player has been downloaded by a personal computer, then the binary application file can be copied from the personal computer to the phone over a wire based or wireless communications link, e.g. infra red or bluetooth, and installed on the phone. If the phone is internet enabled, then a message can be sent by SMS, and a web service can use WAP to push the binary application file to the phone for installation.

Then at step 154, the phone can connect to the ARC server which can initially carry out an authentication process 162 to ensure that the user is authorised and can also check whether the user is registered with the service. In some embodiments, authentication and/or registration of users is optional.

The video content to be viewed can be selected by the user or can otherwise be identified. The database 114 includes a file for each item of video content which identifies the control file 124 associated with the item of content 124 and also an .XML description file for configuring the user interface of the player on the remote user device. For the selected content, the referral module of the ARC server determines which streaming server will supply the content and at step 164 re-directs the player on the user's device to the appropriate streaming server.

For live video content, the player is re-directed to connect to the streaming server providing live video, e.g. streaming server 128, and, if required, the live video feed for that streaming server to supply the selected live video content is also selected, e.g. camera 135 or 136, or a selected television channel. The XML control file 124 associated with the content is loaded on to the ARC server 112. The control file includes instructions indicating what action to carry out dependent on any key presses received at the ARC server and dependent on the time stamp of the content at the time the key press was carried out. Therefore the same key can have different functionalities at different times during display of the content. The control file includes a .assembly name (equivalent to an activeX control) identifying a method to be executed. The control file also includes a command to invoke that method and details of any parameters to be passed to the method, e.g. credit card details. The details of the control file will be described in greater detail below.

Alternatively, if static content has been selected then the static video file 126 is transferred from the file server 122 to the streaming server together with the associated XML control file.

At step 156, the player receives live video data, decompresses it and displays live video to the user and any user interface elements or entities generated by the control file. If at step 158, the user interacts with the displayed video, e.g. by pressing a key while viewing the video content, then the key press is intercepted and passed by the player to a socket on the ARC server using TCP and at step 166 the ARC server control module queries the .XML control file to determine what action to take or method to invoke as a result of that key press.

For example, the key press could correspond to an instruction to control the source of live video, e.g. by controlling a property of the camera, or by selecting a different source of live video, e.g. a different camera or a different television channel feed. Also, the instruction could display a dialogue box, select an option or purchase an item. If a user interface element is to be displayed on the player then a character string is sent to the player which reads the string to determine how to configure and display the user interface element. In the latter case, the ARC server may call a payment processing module in the form of a plugin and pass the relevant parameters to the plugin to effect the credit card payment via an off-platform merchant server 142. The user can continue to interact to control the live video being displayed, as represented by processing loop 159, and the control server continues to handle the actions invoked by the users key presses until the video ends or the user terminates the display of video or closes the player application.

As only key press data and character strings are being sent at the same time that the video is being streamed, the control data requires very little bandwidth and so does not significantly affect the quality of video being displayed.

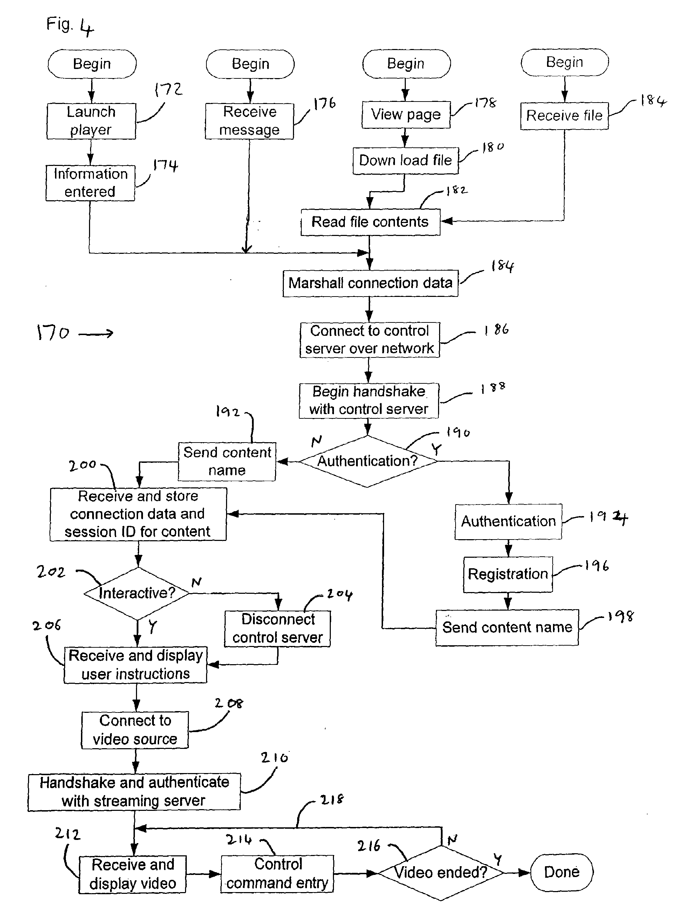

Figure 4 shows a flowchart illustrating a process 170 carried out by the player application on the user device. There are a number of ways in which the player application can be initiated in order to display interactive video. In a first approach, at step 172, the user selects to launch the player application and at step 174 information is entered identifying the video content which the user wants to view.

In another approach, at step 176 an SMS, also referred to as text, message is received at the user's phone which includes information identifying the address of the ARC server and also data identifying the video content to be viewed. In another approach, at step 178, a WAP page can be displayed using the mobile phone and at step 180 a file can be downloaded to the mobile phone, including details of the address for the ARC server and video content to be displayed. Alternatively, at step 184, the mobile phone can receive a file from another device, such as a personal computer, via a wired or wireless connection, such as infrared or blue tooth. Irrespective of how the file is received at the mobile phone, the operating system recognises the file type and passes the file to the player which at step 182 reads the contents of the file. Irrespective of how the ARC server connection data is received, at step 184, the connection data and auxiliary data are marshalled. The ARC server connection data includes the IP address for the ARC server and port number. The data marshalled also includes data identifying the video content to be displayed. In one embodiment, this includes the physical file path of the static video content so that the server does not need to determine the location of the content subsequently. Various auxiliary data items can also be passed in the connection data, including, for example, whether a login protocol is associated with viewing the video content and the size of any buffer to be used for viewing the video content.

At step 186, the user device connects to the control server 112 over the Internet 110 and at step 188 the user device and ARC server are doing a hand shaking procedure to establish communication.

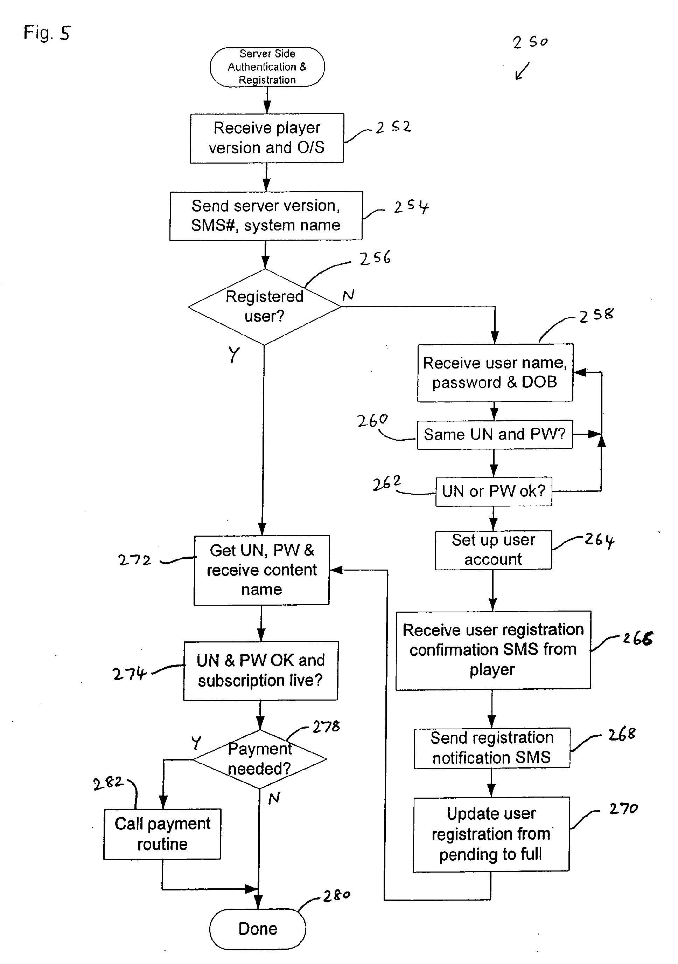

Figure 5 shows a process flowchart illustrating authentication and registration processes 250 carried out by the ARC server 112. At step 252, the ARC server receives data indicating the version player and operating system of the remote device. Using this information, the ARC server can determine the functionalities supported by the player and operating system and ensure that appropriate video and control data is supplied to the player. Then at step 254, the ARC server sends data indicating the version of the ARC server and SMS number for sending SMS messages to the platform and a system name indicating the part or domain of the overall platform to which the device has connected. In some embodiments, a system name or domain name may not be required if the platform comprises a single system or domain. In other embodiments, any one physical platform may host a number of different domains providing different services. The SMS number for the interactive video platform can be used during a user registration procedure as will be described in greater detail below.

Returning to Figure 4. depending on the content to be viewed, authentication of a user may or may not be required. For example, in some instances, the video to be viewed may be made available to a wide number of users in order to encourage the users to view the content in which case any and all users will be automatically authorised to view the content. In other embodiments, user authentication may be required prior to allowing the video content to be viewed. If user authentication is not required then, if data identifying the content to be viewed has not yet been sent from the user device to the ARC server then at step 192 data identifying the content to be viewed is sent to the ARC server. If authentication is required then processing proceeds to step 194 at which an authentication of the user is carried out by the ARC server.

Referring back to Figure 5, if authentication is required then at step 256 it is determined whether the connected user is already registered with the interactive video service or not. If not, then processing proceeds to step 196 at which the user registers with the interactive video service. As illustrated in Figure 5, the ARC server receives a user name, password, and date of birth of the user. At step 260 it is determined whether the entered user name and password correspond to user names and passwords already present on the system in which case processing returns to step 258 and new user names and passwords are entered. If the user names and passwords are unique at step 262 it is determined whether the user name or password meets certain requirements in terms of length and their content and if not processing returns to step 258 and new user names and passwords are received. If the user name and password are acceptable then at step 264 a user account is set up with the status of the user marked as pending.

At some stage during the registration procedure an SMS message is received 266 from the player application which is intercepted by the ARC server and which confirms registration of the user. Then at 268 the ARC server sends an SMS message back to the player notifying the player that registration is complete. Then at step 270 the user registration status is updated from pending to full thereby completing the registration process. However, these processes can occur asynchronously from the rest of the process and do not need to be completed before processing proceeds to step 272.

If identification of the content to be viewed has not yet been sent then at step 198 the user can then send data identifying the content to be viewed to the ARC server.

If the user is already a registered user then processing proceeds directly to step 272 at which the ARC server authenticates the connected user by retrieving their user name and password from the user's table 116 of database 114 and also either receives the video content name or retrieves the video content name if received previously. If at step 274 the user is authenticated as their entered user name and password match the stored user name and password and the user's subscription to the service is currently live then at step 278 it is determined whether the selected video content requires payment. If it is determined that payment is not required then the authentication and registration process terminates at step 280. If payment is required for the content then at step 282 a payment routine is called to handle payment for the content.

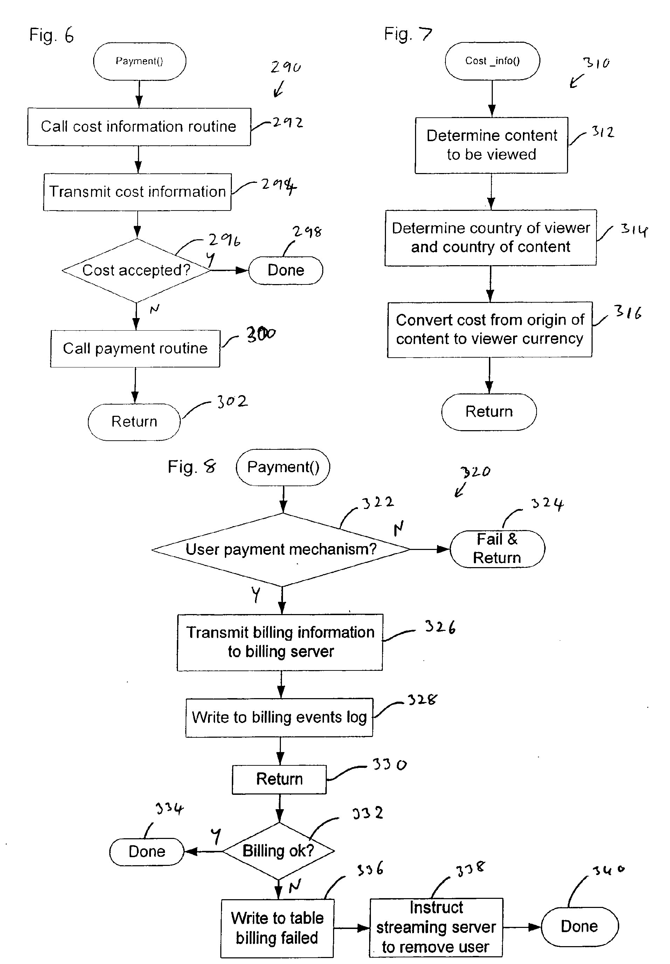

Figure 6 shows a process flowchart illustrating a payment processing process 290, corresponding generally to step 282 or Figure 5, in greater detail. At step 292, the payment processing routine determines the cost of the video content to be viewed. In particular, a cost calculation routine is called to calculate the cost associated with viewing the video content.

Figure 7 shows a process flowchart illustrating a cost calculation process 310, corresponding generally to step 292 or Figure 6 in greater detail. At step 312, the cost calculation routine looks up the content to be viewed by the viewer. Then at step 314, the routine determines the country in which the view is located and the country of origin for the video content. The cost of the content to be viewed is determined from the content table 120 in database 114 and is converted from the country of origin of the content to the country of the viewer to provide the cost in the currency of the viewer at step 316.

Processing then returns to step 294 at which the cost information is transmitted to the user's device and then displayed on the user's device. It is then determined whether the user accepts the cost for the video and if at step 296 data received from the user device indicated that the costs have not been accepted then processing terminates at step 298. If data is received indicating that the costs are accepted then processing proceeds at step 300 and a payment routine is called.

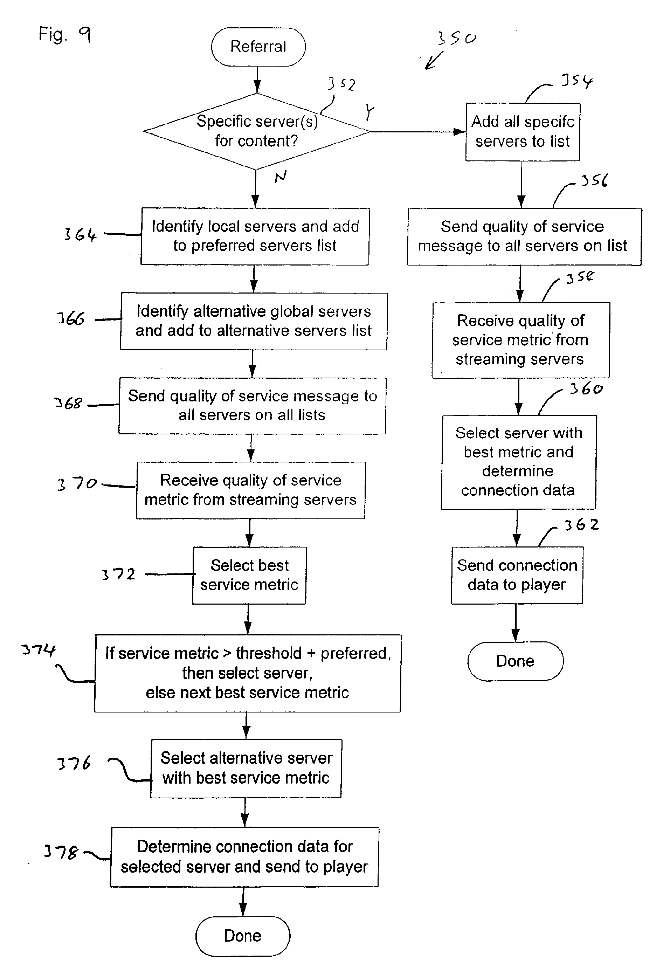

Figure 8 shows a process flowchart illustrating a payment process 320, corresponding generally to step 300 or Figure 6, in greater detail. At step 322, it is determined whether the user's table 116 of database 114 indicates that a payment mechanism is available for the user. If it is determined that no payment mechanism is available, then processing proceeds to step 324 and the payment mechanism fails. If it is determined that a payment mechanism is available then processing proceeds to step 326 at which billing information is sent to a billing server and at step 330 a billing events table in database 114 is updated to log the billing transaction. Prior to completion of the billing transaction by the billing server, processing returns to process 290 which then returns to step 280 of authentication registration process 250 and authentication registration of the user is completed. However, payment process 320 remains a background thread of processing and at step 332 it is determined whether the billing server has confirmed that the billing process was completed. If the billing process was completed successfully then processing proceeds to step 334 and the payment process 320 terminates. If billing was not completed, then at step 336 a billing events table is updated to reflect that the billing failed. Then at step 338 a command is generated and sent to the streaming server currently delivering the content in order to stop streaming content and remove the user from the system. Processing then terminates at step 340.

Various data items can be used in order to determine the cost of the video content. These can include, for example, the duration of the content, a rate per unit time for viewing the content, a currency associated with the origin of the content and whether charges for the content are made before or after viewing the content. This information is available in the content table 120 of database 114.

After completion of any authentication and registration of the user, step 162 of process 160 then at step 164, the ARC server moves into a referral mode of operation during which the server determines the most appropriate source of the video content to be viewed and redirects the player to connect to that source. Figure 9 shows a flowchart illustrating the referral process 350 in greater detail. At step 352, the referral process determines whether the selected content is only available on specific servers or whether it is available on all streaming servers or whether it is only available on a few of the streaming servers. If the content is available on specific servers only, then processing proceeds to step 354 and a list of the specific streaming servers having access to the content is generated. Then at step 356, the referral module sends a message to all of the servers on the list requesting that they return an indication of how well they would be able to service streaming of the requested video content.

In particular, a quantitative metric representing how well the server would be able to service a request is generated. The metric can be based on a number of factors, including the current number of connections to the streaming server, the size of files currently being streamed by the server, whether the server has local access to the content and the band width of the network over which the server would stream the video data. Any combination of these and other properties determining the quality of service that would be available from the server can be used to generate the quality of service metric. Then at step 358, the referral module receives quality of service metrics from the streaming servers and at step 360 the referral module selects the streaming server having the best metric and determines the IP address and port number to which the user device should connect. At step 362 that connection data is then transmitted to the user device.

Returning to step 352, if it is determined that the content is not server specific, at step 364 all streaming servers local to the ARC server are selected and added to a list of preferred servers. Then at step 366, any non-local streaming servers are identified and added to an alternative servers list. Then at step 368 the referral module sends a message to all the servers on both the preferred and alternative servers lists requesting them to return a quality of service metric. At step 370 quality of service metrics are received from the streaming servers. The quality of service metric is the same as that described above. Then at step 372 the referral module determines which server is likely to provide the best quality of service, based on the quality of service metric. Then at step 374 an algorithm is used to determine whether the best of the local servers can provide a sufficiently good quality of service and if not the best of the global servers is used. In greater detail, if the selected best service metric exceeds a user configurable threshold and if that server is on the preferred servers list then that server is selected as the server to stream the video content. If not, then the next best service metric for all servers is identified and the same determination is made again. If none of the local servers have a service metric meeting the threshold then at step 376 the global server on the alternative servers list having the highest service metric is selected as the streaming server for the content. Then at step 378, for the selected server, the IP address and port number are determined and sent to the player. This completes the referral stage of the ARC server's activity.

Returning to Figure 4, at step 200 the player receives and stores the connection IP address and port number and also a unique identifier for the current session which was generated by the ARC server.

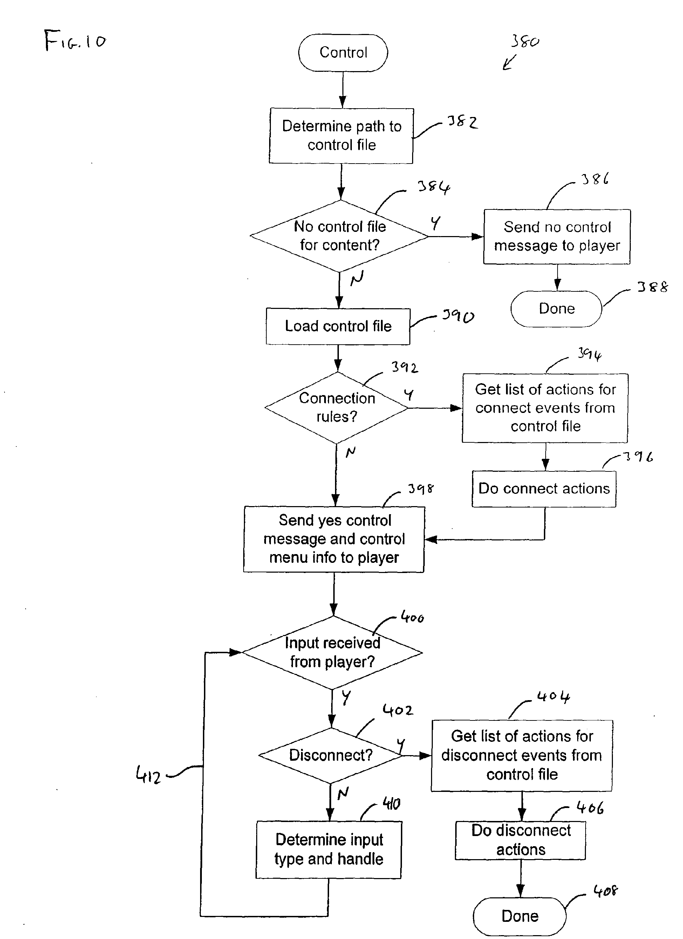

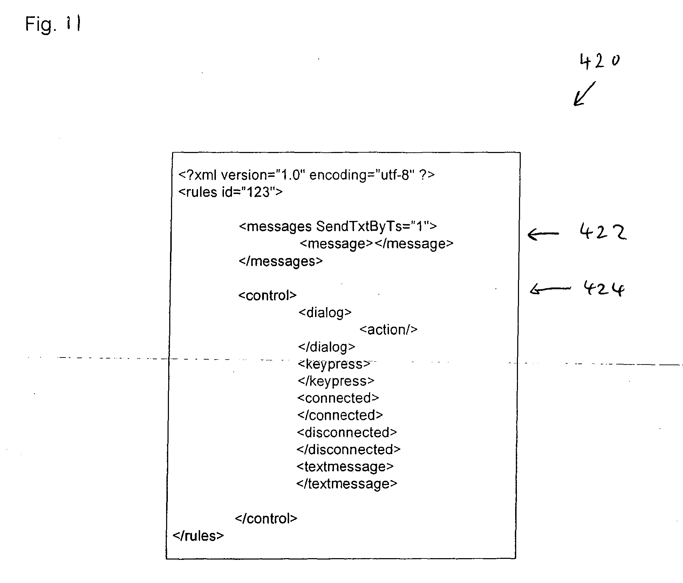

Meanwhile, the ARC server proceeds to the control phase of its operation, as indicated generally by step 166 of Figure 3. Figure 10 shows a process flowchart illustrating a control process 380 carried out by the ARC server 112 in greater detail. At step 382, the control module determines the path to the control file 124 associated with the selected video content. A look-up is carried out on content table 120 of database 114 to determine the path to the control file for the selected content. If it is determined at step 385 that there is no control file for the content, as the path to the control file is absent, then at step 386 a message is sent to the user device indicating that the video is not interactive and the control process then terminates at step 388. If at step 384 it is determined that there is a control file then at step 390 the control file 124 is loaded from file server 122 into ARC server 112. Figure 11 shows a schematic representation of the data structure of a control file 420 which will be described in greater detail below. At step 392, a connection part of the control file is read by the ARC server to determine whether there are rules governing connection of the user device to the streaming server. If connection rules do apply then processing proceeds to step 394 at which a list of actions to be carried out in connecting the user device to the streaming server is obtained from the control file and at step 396 those connection actions are carried out.

Once the connection actions are completed, or if there are no connection rules, then processing proceeds to step 398 at which data is sent to the user device indicating that the video to be displayed is interactive and also sending control menu information to the user device so that a menu of control functions can be displayed by the player to the user.

Returning to Figure 4, at step 202, the player determines whether the video content is interactive depending on the data received from the ARC server. If the player has received an indication that the video is not interactive then processing proceeds to step 204 and the user device can disconnect from the ARC server as no further interaction with the ARC server is required. Processing then proceeds to step 206 at which the player receives the control menu information from the ARC server and displays the control information to the user. Then at step 208, the player causes the user device to connect to the appropriate streaming server using the IP address and port number received at step 200. At step 210 various hand shaking and authentication operations can be carried out with the streaming server and then at step 212, the device starts to receive the streamed video data which is decoded and displayed by the player at step 212. At step 214, the user can operate the keys to select various interactive functions by user interface entities, such as dialogue boxes, lists, menus and other similar data input entities. At step 216 it is determined whether the video has ended or whether the user has otherwise stopped the video display and if not then processing loops, as indicated by line 218 and the video is continuously displayed and the user can interact with the displayed video. Once the video has ended processing terminates.

As mentioned previously, any key press data entered by the user, and the time at which the key press was made during the video display, is transmitted from the user device to the ARC server at step 400 to determine whether any key press data has been received by the ARC server. If not, then the ARC server merely waits until key press data is received. If key press data is received then at step 402 it is determine whether the key press data corresponds with an instruction to disconnect the user device from the streaming server. If so, then the control file is read by the ARC server to determine whether there are any disconnection rules. If there are disconnection rules in the control file then processing proceeds to step 404 and a list of actions to be carried out by the control server is obtained from the control file and at step 406 the disconnection actions are carried out and processing terminates.

If the key press or other input received from the user device does not correspond to the disconnection command then at step 410 the control server determines the type of input and reads the control file to determine what actions are required in response to the current input. Processing then loops, as indicated by line 412 to determine whether further input has been received from the user device.

Figure 11 shows a schematic representation of the data structure of the control file 420. A control file is associated with each item of video content and defines the rules governing what action the ARC server should carry out in response to any user input and also what messages the streaming server should send to the player for display. In one embodiment the control file is an XML file. The control file includes a messages section 422 and a control section 424. Hence, the general format of the control file is:

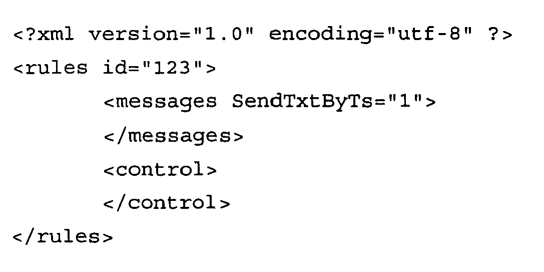

The messages node or part 422 contains messages to be sent to the player and is used by the streaming server. The control node or part 424 is used to handle data sent from the player as a result of user input or interaction with the player, and is used by the ARC Server. Each part of the control part can define various actions to be carried out.

The <messages> tag can have the attribute SendTxtByTs set to 1 or 0. Set to 1 means that the time specified with the message is the timestamp of the frame to show the message with. Set to 0, means the second after streaming has begun to send the message, regardless of players position in the stream.

Inside the messages part are message nodes, eg.

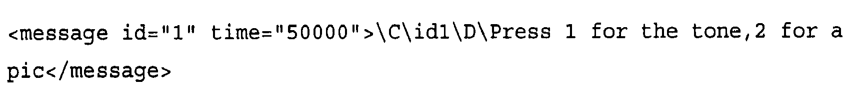

The message body can contain formatting to dictate how the message is displayed. This can mean as a dialog, banner or footer to the video, a confirmation box, a selection box, and edit box or a numeric edit box. Details of the formatting are described below. In this case, a dialogue box message, the id is not significant and the id is just a dummy. The time data is in ms and is used by the streaming server to determine when to send the message and also by the player to determine when to actually display the message. the server sends the message when the timestamp in the video being streamed matches the time and the player actually displays the message when the timestamp of the video being displayed matches the time.

Inside the control part or node can be nodes that represent the various actions to be performed on certain events. These events are keypress, message entry, responses to input capable messages (dialogs), connection and disconnection from the stream.

The dialogue node or part resides inside the control part and deals with the responses to displayed messages that can accept input and form part of a dialogue. They have the format, for example, of:

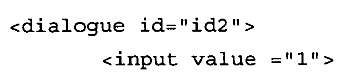

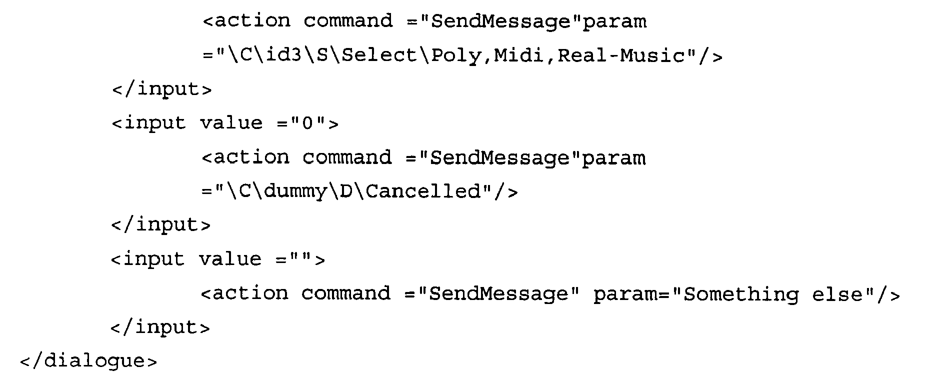

The id attribute represents the id of the message that caused a dialogue input type to be displayed, and the user to enter/select a response. The input nodes compare the value received from the dialogue. In the above example, the SendMessage command is carried out with different parameters depending on whether the "1", "0" or no key was pressed. In the case of a selection box, the values are the indexes of the items in the list. In the case of a yes/no box, the input values are either 1 or 0. In edit and numeric boxes, the value will be that typed in. An input value of "*" can be used to represent a default if none of the others match. Inside the input nodes are one or more action nodes which are described later.

The keypress node or part resides in the control node and deals with key presses on the device user device. Their format is, for example, as follows:

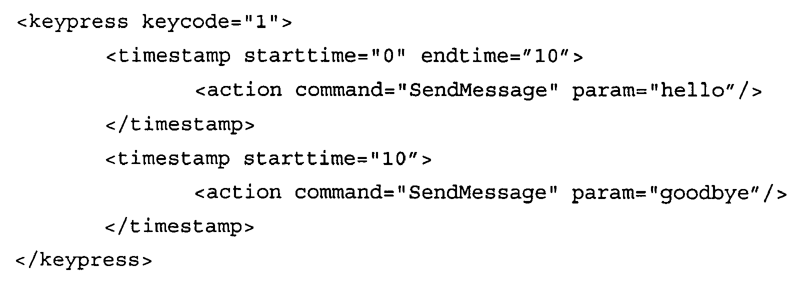

In the above example, pressing the "1" key between 0 and 10 seconds causes the message "hello" to be displayed and pressing the "1" key after 10 seconds causes the message "goodbye" to be displayed. In general, the keycode is the character of the keypress (0-9).

The timestamp node within specifies the time restrictions that the keypress applies to. The endtime is optional if the keypress event is applicable anytime after the start time. Hence, the following format is also valid:

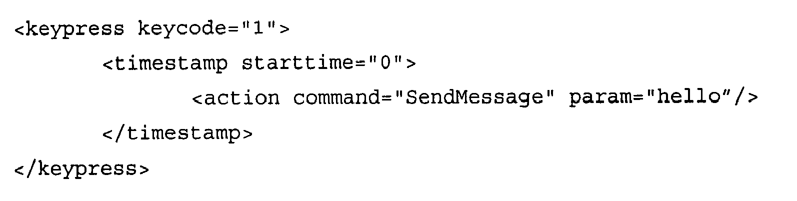

Within the timestamp node is one or mode action modes, which will be explained later.

The connected part or node also resides inside the control node and specifies the actions to be performed when a player connects to a video stream. For example, it can have the format:

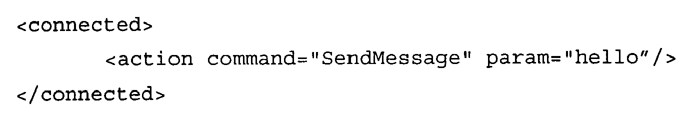

Within the connected node are one or more action nodes.

The disconnected part or node also resides inside the control node and specifies the actions to be formed when a player disconnects from the stream. For example, it can have the format:

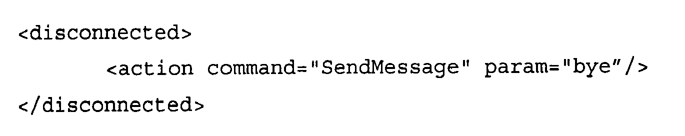

Within the disconnected node are one or more action nodes.

The textmessage part or node resides inside the control node. These are user initiated text messages sent from within the player. For example, they can have the format:

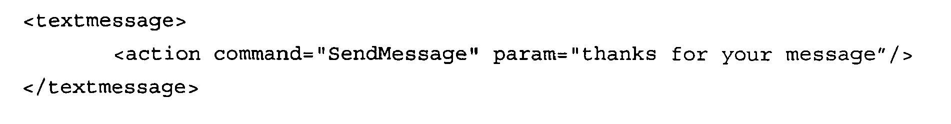

The action node is used inside each of the dialogue, keypress, connected, disconnected and textmessage nodes. It represents an action, or multiple actions to be performed, for example:

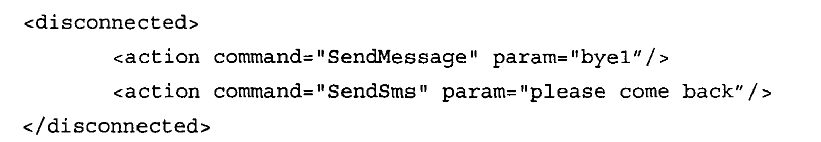

This combination of actions would cause a byel message to be sent to the player and also an SMS message containing "please come back" to the users phone, on disconnecting from the video stream.

The action node can either perform local or native actions which are built into ARC the arc server or custom or non-native actions which are loaded from plug ins at run-time. All the examples shown so far have used local actions.

The following local actions can be used:

SendMessage: Which sends a message back to the player and uses the same message formatting as in the messages node.
ChangeContent: Which tells the ARC server to change the content being viewed to another file, specified by the param.
ChangeContext: Is similar to changecontent, but also take into account any differences in charging for the video content.
ChangeCamera: Which tells the encoder to change to a different input source.
Log: Which just logs a message to a file
SendSMS: Which sends an sms message to the user
SendMessage: Which sends a message back to the user using the message formatting.

Non-native or Plugin actions allow methods in dynamically loaded dlls to be called. The action node needs additional parameters to specify the location of the dll, and the method to call, e.g.:

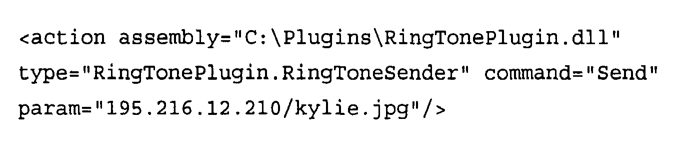

The format of the message sent in either the messages from the streaming server, or the SendMessage local action from the ARC server, can contain formatting information to dictate how the content of the message appears to the client. The default option is that A message with no formatting information appears at the top of the display screen, in red on a black background, for 5 seconds or until replaced with another message.

This 'border' style of simple message is formatted by sending alphanumeric strings, of the following format: 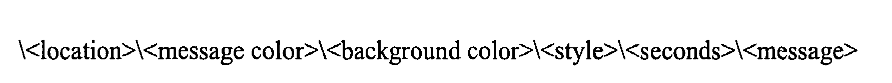 where <location> is either "t" for top or "b" for bottom of the screen, message color and background color are integers representing the color of the text or background border respectively, style can be an integer used to specify a style of the display, seconds is the number of seconds to display for, and message is the message body. For example:
\b\255\0\1\10\hello
shows "hello" at the bottom of the screen in red, on a black background, for 10 seconds.

The other type of formatted message are dialogue style messages. They start with \C\id. The ID field is set to allow the message to be tied up with a corresponding dialogue node in the control file. Hence, when a dialogue is begun with a dialogue style message, the next message to display in the dialogue can be determined based on the ID field. The remainder of the message differs depending on the dialogue message type.

For the Dialogue Box message type, the message is shown in a popup dialogue box and has the format: \C\id\D\message. For the Confirmation Box message type, the message is shown with a yes/no choice to which the users selected option is returned to the ARC server. They have the format: \C\id\C\confirm purchase?. For the Selection Box message type, the message is shown with multiple choices and the index of the option chosen by the user is returned to the ARC server. They have the format:
\C\id\S\title\item1,item2, item3. For the Edit Box message type, the message is shown with a text edit box. The text entered by the user is returned to the ARC server and they have the format: \C\id\E\header. For the Numeric Box message type, the message is shown as a box with a numeric entry field and the value entered by the user is returned. They have the format: \C\id\N\header.

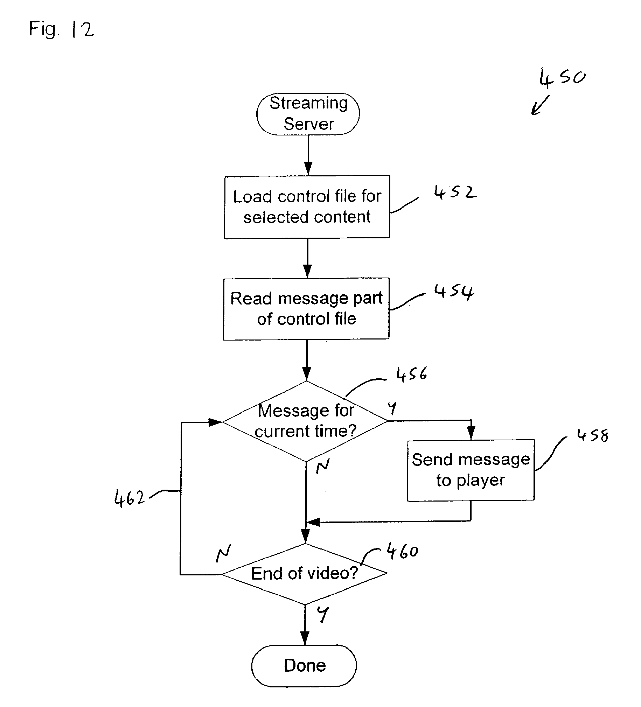

Referring now to Figure 12, there is shown a process flowchart illustrating a messaging process 450 carried out by the streaming server while it streams video data to the user device. Prior to initiating streaming of the video data, at step 452, the streaming server loads the control file for the selected content. The streaming server determines the control file to load by carrying out a look-up in the content table 120 of database 114 and having the file server 122 transfer the appropriate control file 124 to the streaming server. Then at step 454, the streaming server reads the message part of the control file. The streaming server can determine the current time stamp for the video data being streamed to the user device. Then at step 456 the streaming server determines whether the message part of the control file indicates that a message should also be sent to the player for display on the screen, based on the current time stamp. If it is determined that a message should be displayed then this processing proceeds to step 458 at which a streaming of characters defining the message to be displayed by the player is generated and sent to the user device. Either way, processing eventually proceeds to step 460 at which it is determined whether the end of the video data has been reached. If not then processing loops as illustrated by line 462 and the streaming server continues to monitor the current time stamp of the streamed video to determine whether a message should be displayed. When it is determined at step 460 that the video has ended then the streaming server process terminates.

The messaging information sent to the player includes both content for the message and also formatting for the message determining how that content should be displayed. For example the message can be simple text, such as a title, and include the format in which the text is to be displayed. A message can define a text box or data entry field, or other user interface entity, into which the user can enter information or from which the user can select an option or enter a command. The message can be in the format of a menu or list from which various items can be selected by the user. The message can define the format of a yes/no box. The message can be in the format of a message overlayed over the video into which the user can enter a textural message to be transmitted to the system. Any of the messages allowing for user reply include a data item identifying the dialogue, or stage of the dialogue, of which the message is a part.

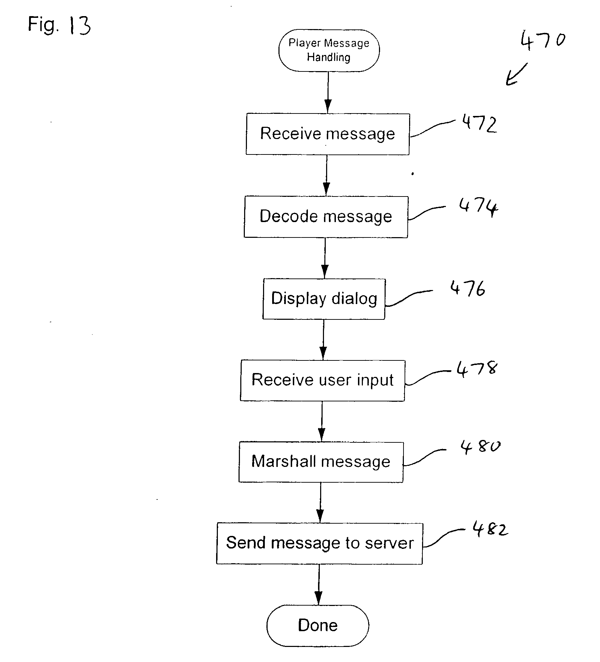

Figure 13 shows a process flowchart illustrating a message handling process 470 carried out by the player and the user device. At step 472, the player receives the message which is in the format of an alpha numeric string which defines both the content of the message and the format in which the message is to be displayed by the player. Formatting information can include how a text is to be displayed, whether it is to be presented as a header or footer, the font, the size and the colour of the text to be displayed. The alpha numeric string entirely defines the user interface element which is to be displayed to the user by the player, as described above. At step 474, the player decodes the alpha numeric string to determine the content and format of the entity to be displayed and at step 476 the user interface entity, or dialogue element, is displayed to the user by the player. At step 478 any user input is received. For example the user may press a y or n key to accept or refuse an option. Alternatively, the user may select an element from a list. Alternatively, or additionally, the user may enter a text message. Then at step 480, the key press information is marshalled into an alpha numeric string which includes a data item identifying the step of any dialogue with which the message is associated, and the message is transmitted to the Arc server at step 482 for handling.

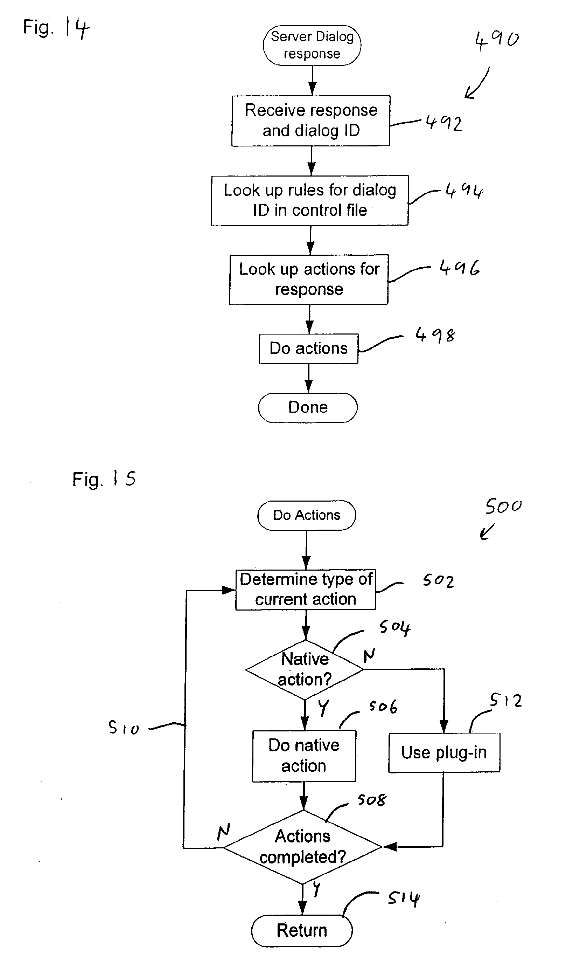

Figure 14 shows a process flowchart illustrating a dialogue response handling process 490 carried out by the server when it receives a response to a dialogue message. At step 492, the ARC server receives the key press data or text data and the dialogue item identifier transmitted from the user device. Then at step 494, the ARC server looks up in the control file the rules associated with the dialogue ID returned by the user device. Then at step 496, the ARC server determines the list of actions associated with the identified step of the dialogue and at step 498 each of the identified actions is carried out.

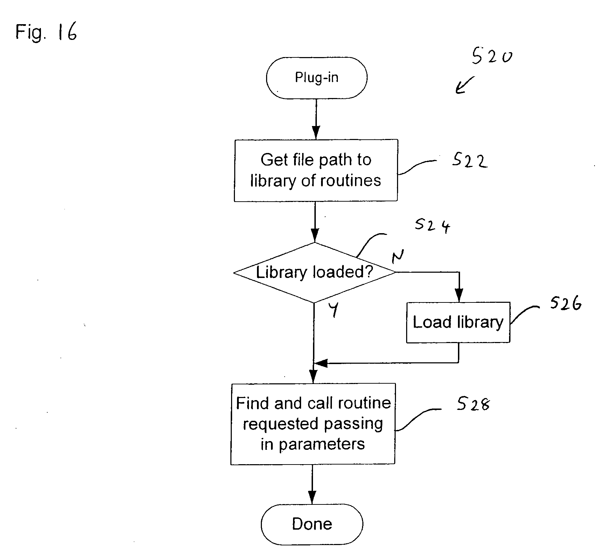

Figure 15 shows a process flowchart illustrating a do actions process 500 carried out by the ARC server. At step 502, the ARC server determines the type of the current action. Examples of the types of action that can be carried out have been described above in connection with the description of the control file. The ARC server determines the type of the current action by determining whether a plugging name is associated with the action being currently assessed. If no plug in name is associated with the action, then at step 504 it is determined that the action is a native action, that is an action that the ARC server can carry out itself. Processing then proceeds to step 506 at which the ARC server carries out the action. It is then determined at step 508 whether all the actions for the current list of actions have been completed. If not then processing returns to step 502 as indicated by line 510.

If at step 504 it is determined that the action is not native to the ARC server then processing proceeds to step 512 at which the non-native action is carried out using a plug in. Processing then proceeds to step 508 and continues as described above until all the actions in the current list have been completed, following which the process terminates at step 514.

Figure 16 shows a process flowchart illustrating a process 520 for using a plug in to carry out a non-native action, corresponding generally to step 512 of Figure 15. At step 522, the ARC server determines the file path to the library of routines including the routine required to carry out the non-native action. At step 524, it is determined whether the library of routines is currently loaded into memory on the ARC server and if not processing proceeds to step 526 at which the appropriate library is loaded. When, or if, the appropriate library is loaded, processing proceeds to step 528 at which the method required by the non-native action is found in the loaded library and routine is called passing in any parameters required by the routine and any auxiliary data required or handling the results of the routine, such as data identifying the connected user and the phone number of the connected user. The called routine then carries out its action. The results of any action are then returned to the control server or directly to the user device, depending on the action called.

For example if the called routine is a payment method then the routine may simply execute the payment method and if the payment is successful then no result may be required. However, if the payment is not successful then the result of carrying out that method may need to be handled by the control server or the streaming servers in order to prevent further viewing of the associated content. Alternatively, the payment method may be used to charge the user for goods associated with the interactive video and purchased by the user while viewing the interactive video.

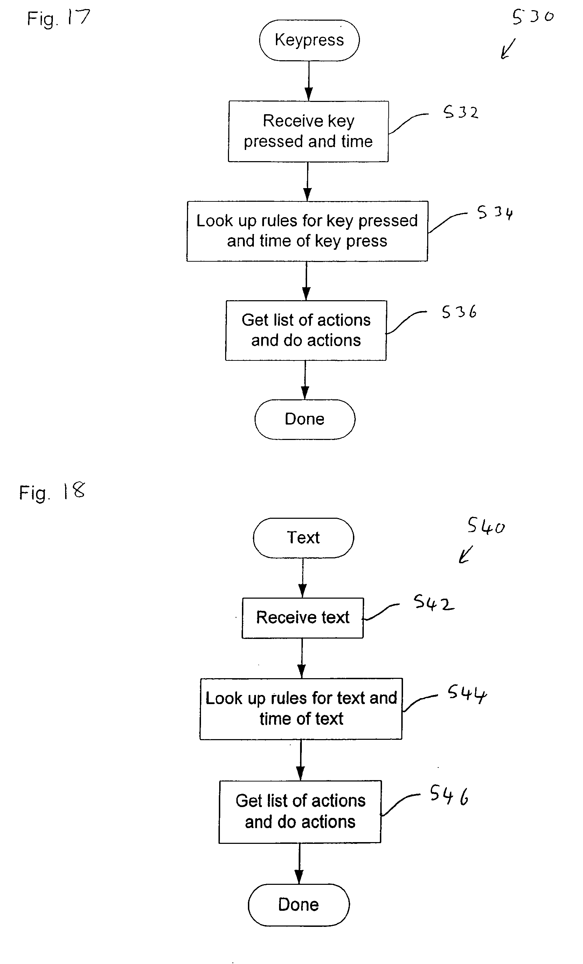

Figure 17 shows a process flowchart illustrating a key press handling process 530 carried out by the ARC server. At step 532, the ARC server receives a control signal from the user device which includes the key that was pressed on the user device and the time during the display video at which the key was pressed. At step 534 the ARC server looks up in the control file the rules associated with key press events and in particular the rules associated with the particular key that was pressed. The control server then also looks up the rule associated with that particular key for the time at which the key was pressed. As explained above, the same key can initiate different actions depending on the time during the video at which the key was pressed. At step 536 the control server gets the list of actions from the control file and carries out the actions using the do actions process 500 as illustrated in Figure 15.

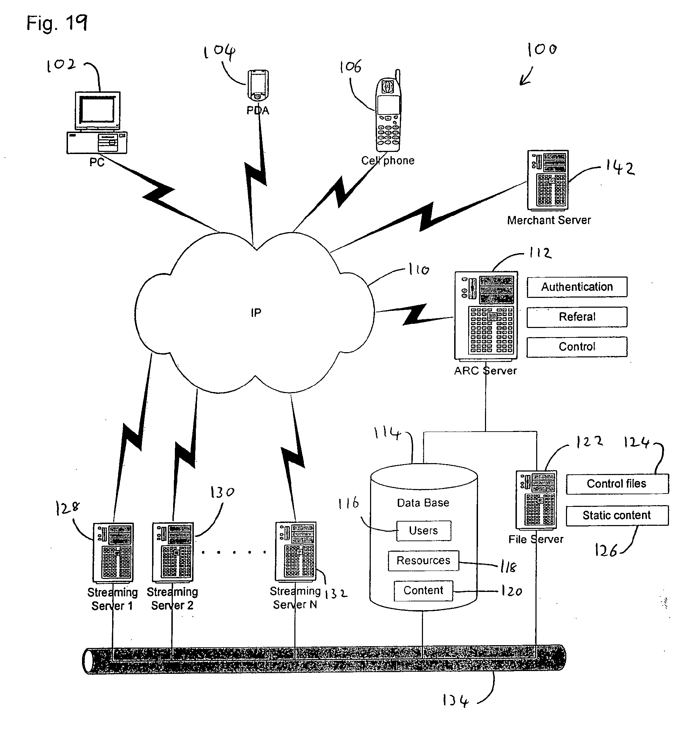

Figure 18 shows a process flowchart illustrating a text handling process 540 carried out by the ARC server. At step 542, the ARC server receives as text message from the user device, for example as entered into a data entry field displayed on the user device. In the current context, the text message is not being used to refer to SMS messaging, but rather to a textural message entered into and handled by the player application. Based on the format of the incoming data, the control server determines that the current user input corresponds to a text message and accesses the text message part of the control file to determine what actions to carry out for a text message for the time at which the text message was entered. At step 546 the ARC server gets the list of actions and executes those actions according to the do actions process 500 illustrated in Figure 15.

At some times, the video being displayed on the user device can lag behind the video being streamed to the user device in real time. The ARC server can carry out a process to cause the video being displayed to catch up with the video being sent. The ARC server calculates the delay time by which the video being displayed on the player lags the real time of the live video being sent to the player. If the delay time exceeds a threshold value calculated as the sum of a live stream delay, and intra frame frequency and a round trip delay, then a live catch up process is carried out. The ARC server sends a command to the player to clear any buffers it has and the streaming server is instructed to start sending data from the original delay behind real time, which is the live stream delay and somewhere between zero and the intraframe frequency. For example, if the initial delay when streaming commences is set to 1 second, owing to internal buffering of video data, and if GPRS network delays occur resulting in the delay increasing to 5 seconds, then the ARC server issues an instruction to the player to clear its video buffers and then streaming recommences, but with the initial delay of 1 second.

An application of the interactive video platform in the control of live video and sources of live video will now be described in the context of a closed circuit television security system. In this example, the user can interact with the live video using their mobile phone to either control the camera currently acting as the source of live video or to select a different camera to act as the source of live video and then control that camera. An example control file would be as follows:

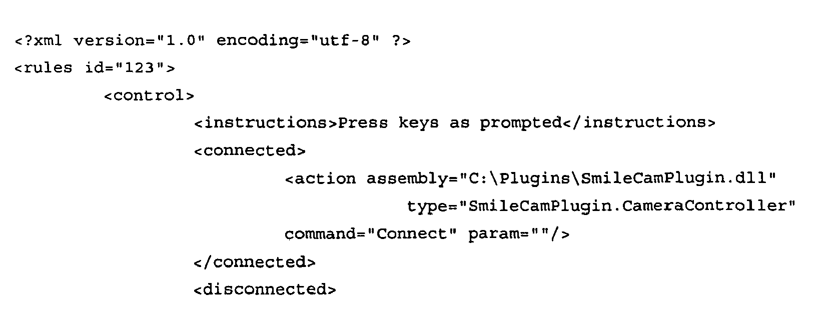

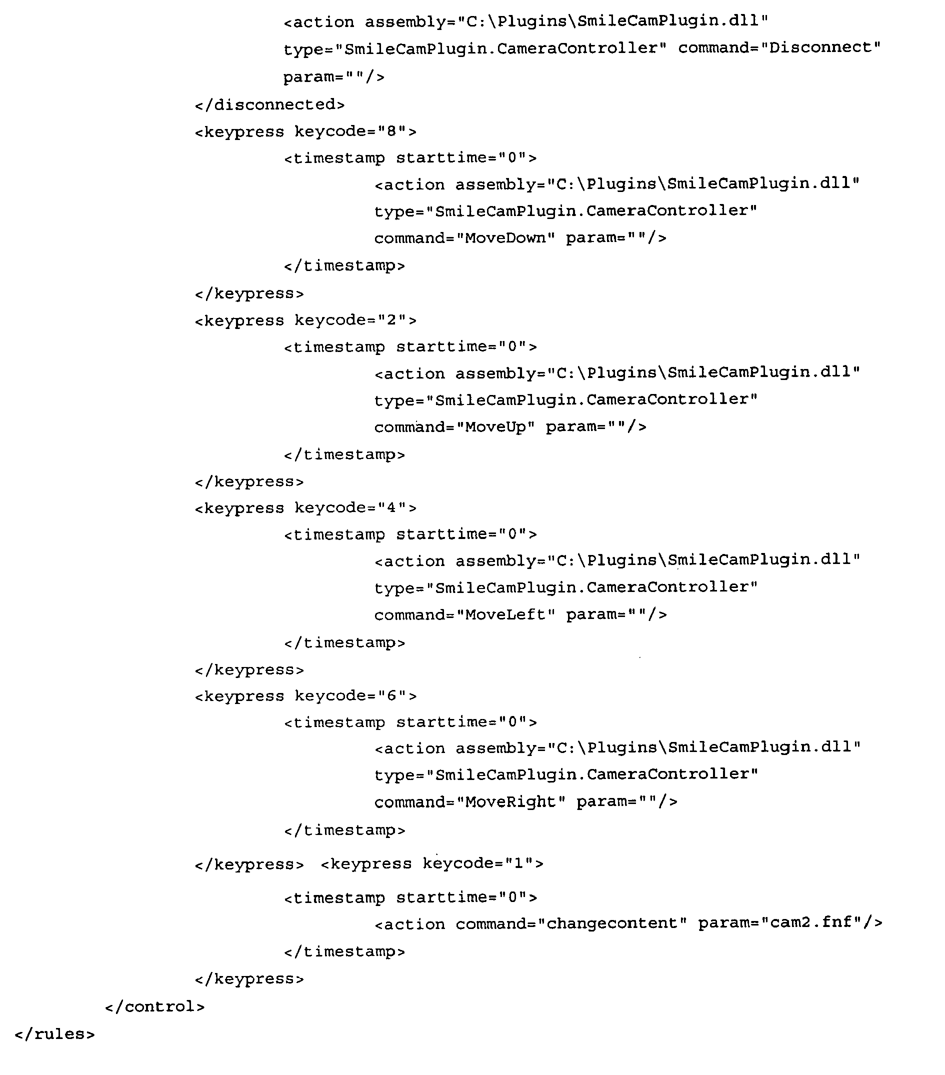

The user initially connects to the control server using the player and can either enter a key press to select an initial camera or the control server can use a stored default value for the identified user to automatically select an initial camera. The control server can either refer the user device to the streaming server to which the initial camera is connected or alternatively, the player can automatically connect to the appropriate streaming server after having sent a message to the control server notifying the control server that the user is going to connect to the streaming server, so that the control server can load the control file associated with the security camera.

The control node of the above control file causes various actions to be carried out depending on which key of the key pad of the users communication device are pressed. Initially an <instructions> node causes user instructions to be displayed to the user explaining what actions are caused by different keys. On connection to the streaming server, the <connection> node calls SmileCamPlugin.CameraController at C:\Plugins\SmileCamPlugin.dll to execute command Connect so as to connect the streaming server to the live video stream from the default security camera. If the 8 key is pressed at any time, then SmileCamPlugin.CameraController is called to execute method MoveDown which causes the camera to pan down by sending an electrical control signal to move the camera. If the 2 key is pressed at any time, then SmileCamPlugin.CameraController is called to execute method MoveUp which causes the camera to pan up in a similar manner. If the 4 key is pressed at any time, then SmileCamPlugin.CameraController is called to execute method MoveLeft which causes the camera to pan to the left and if the 6 key is pressed at any time then method MoveRight is executed to cause the camera to pan right. Hence the user can control the live video source currently being displayed.

If the 1 key is pressed at any time, then native action changecontent is executed by the ARC server with parameter cam2.fnf passed in causing the encoder for the current streaming server to be switched to take the output of a different security camera as its input, which is then encoded and streamed to the user device. The user can then control the live video displayed by the second camera in the same way as for the first camera. In other embodiments, the ARC server can re-direct the user device to connect to a different streaming server, instead of simply switching the input to the encoder for the same streaming server.

A <disconnect> node is also included causing a plug in to be called to disconnect the user device from the streaming server.

As will be appreciated, there are a wide number of applications in which allowing a live video feed to be controlled or to select a live video feed can be of utility. For example, if a television program captures video from a plurality of differently position cameras, or a plurality of cameras capture different footage, *e*.*g*. different views of a field of play or tracking different players during a sporting event, then using the invention of the present invention, the user can select which of those live video feeds to display on their communication device. Alternatively, or additionally, in other applications in which a camera can be controlled, the user can control the camera to change its field of view, to zoom in or out or to otherwise control the image that is captured and displayed to the user.

Another application would be live video with instant two way messaging. The subject would have their image captured by a camera and the live video feed is fed to an encoder for streaming to the user device. The subject can enter message text to the streaming server or control server via an input device, such as a key board, which are then automatically sent to the user device according to the text messaging process described above. The message is then displayed to the user and the user can enter a reply message which is then sent back to the ARC server which causes the message to be displayed on a display device visible to the subject. Hence, live video of the subject can be viewed on the user device while allowing real time messaging between the subject and user. The user can enter control commands to control the camera and/or to select to use a different camera to view the subject. Audio signals can also be transferred and played using the telephony part of the mobile phone and a suitable telephony device and microphone and speaker at the subject side. Hence, the user and subject can also, or alternatively, converse during the display of live video of the subject.

A further application would be to facilitate gambling by providing live video footage of a gambling event, such as horse racing, a cards game, roulette, etc., and then allowing users to control live video and place bets by using user interface entities to select what outcome to bet on, the odds and to receive payment data, such as credit or charge card details.

In another application, the user can simply switch between different live TV channel feeds to an encoder, or encoders, so that the users communication device acts like a television. In some embodiments, various of, and various combinations of, the interactive functionalities described above can be included with the control of live video. Therefore, various different applications of the interactive video platform of the present intention will be apparent in light of the foregoing description of the invention. For example, user interface entities can be displayed allowing merchandise associated with the displayed video content to be selected and purchased.

Figure 19 shows a schematic block diagram of an interactive video platform according to a second embodiment of the invention. The second embodiment is generally similar to the first embodiment shown in Figure 1, except that the second embodiment does not include sources of live video but only of static, i.e. pre-recorded, video content.

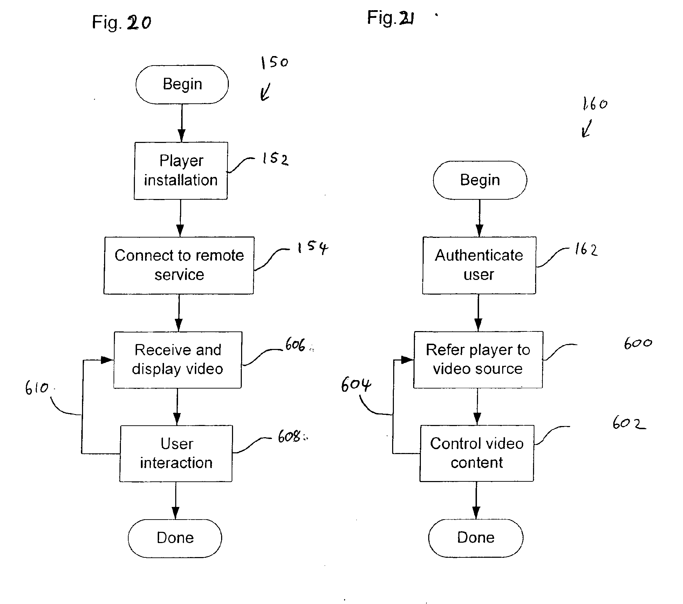

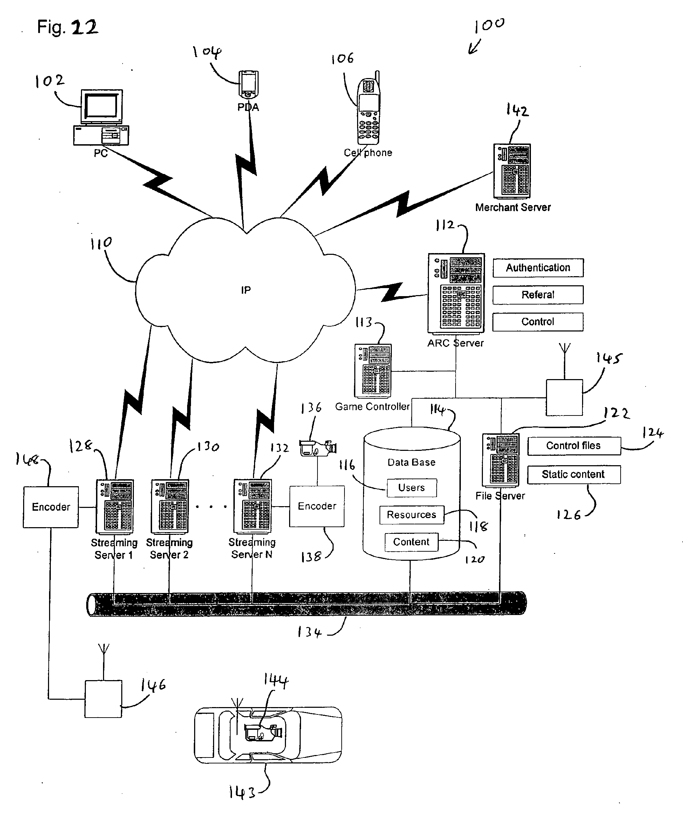

Figures 20 and 21 show processes carried out by the user device and on the platform respectively and are generally similar to Figures 2 and 3 except that they relate to the display of and control of pre-recorded video.

As described above, the video content to be viewed can be selected by the user or can otherwise be identified. The database 114 includes a file for each item of video content which identifies the control file 124 associated with the item of content 126 and also an .XML description file for configuring the user interface of the player on the remote user device. For the selected content, the referral module of the ARC server determines which streaming server will supply the content and at step 600 re-directs the player on the user's device to the appropriate streaming server.

The static video file 126 is transferred from the file server 122 to the selected streaming server together with the associated XML control file and the player is re-directed to connect to the streaming server having the loaded video file. The XML control file 124 associated with the content is loaded on to the ARC server 112. The control file includes instructions indicating what action to carry out dependent on any key presses received at the ARC server and dependent on the time stamp of the content at the time the key press was carried out.

At step 606, the player receives video data, decompresses it and displays video to the user and any user interface elements generated by the control file. If at step 608, the user interacts with the displayed video, e.g. by pressing a key while viewing the video content, then key press is intercepted and passed by the player to a socket on the ARC server using TCP and at step 602 the ARC server control module queries the XML control file to determine what action to take or method to invoke as a result of that key press to control the video content being displayed. For example, the key press could correspond to an instruction to display a dialogue box, select an option, control how the video is being displayed, select a different item of video content or purchase an item. If a use interface element is to be displayed on the player then a character string is sent to the player which reads the string to determine how to configure and display the user interface element. In the latter case, the ARC server may call a payment processing module in the form of a plugin and pass the relevant parameters to the plugin to effect the credit card payment via an off-platform merchant server 142. The user can continue to interact with the displayed video, as represented by processing loop 610, and the control server continues to handle the actions invoked by the users key presses , as represented by processing loop 604, until the video ends or the user terminates the display of video or closes the player application.

As only key press data and character strings are being sent at the same time that the video is being streamed, the control data requires very little bandwidth and so does not significantly affect the quality of video being displayed.

Further interaction, and details thereof, between the user and platform is generally as described above with reference to Figures 4 to 18 with any modifications necessary to implement the embodiment illustrated in Figure 19 and as described further below.

An example application of the interactive video platform is for displaying and playing music videos on a user device. In this embodiment, the static content comprises a plurality of files each of a different pre-recorded music video which has been encoded and stored in encoded form. A control file is associated with each of the music video files defining what user interactions are available to the user. When the user device connects to the control server, the user can select a video to display and the ARC server re-directs the user device to the most appropriate streaming server and the encoded video file is loaded onto the streaming server. The video is then streamed to the user device, which decodes the video and displays the video and also plays the music part of the video file.

At various times during the video display, the streaming server can send a message to the user device, allowing the user to interact. For example, a message can be sent advising the user that it is possible to purchase merchandise associated with the content currently being displayed. For example, the user may be offered the opportunity to download the video or music or to purchase a ring tone or wallpaper associated with the video or to purchase other merchandise, such as clothing. Alternatively, or additionally, the user may be prompted with the opportunity to receive information about the video being displayed, such as information about other tracks by the artist or details of other recordings. The user may also interact with the video by pressing keys on the keypad to control the video being displayed, for example, to play, pause, forward, rewind or otherwise control the video. The user may also interact with the video by pressing keys on the keypad to select to view a different item of pre-recorded video. For example, the user can select to view other videos by the same artist or a videos by other artists. The ChangeContent native method of the ARC server can be used to accomplish this by causing a different file to be retrieved and loaded onto the streaming server to which the user device is connected.

In order to reduce any delays between a user selecting a different item of content and that item of content being displayed, two buffer clearing methods can be used.

On the streaming server side, it can be useful to control the rate and amount of data streamed to the telecommunications network owing to buffering by the telecommunications network. If the rate of data transfer to the telecommunications network is not controlled, then it is possible for the streaming server to transfer data to the network faster than the phone can read the data from the network. The excess data is buffered by the network. Hence, if a 30s video clip can be sent to the network by the streaming server in 5s, the remaining 25s would be held in a buffer on the network, which the phone would read from as fast as it can. Hence, if a video change is requested on a buffering network, there would be a significant delay before the phone starts to receive the new video content. For example, if a new video clip were requested 5s after the start of the first video clip, then the server would send the new video clip in 5s, but there would still be 25s of the previous video clip buffered on the network and to be displayed on the phone before the new video clip can be displayed. There is no ability to clear the buffering on the network.

To counter this potential effect, the streaming server communicates with the player to establish the rate at which the player is consuming data. The streaming server then controls the rate at which data is sent to the network so as to avoid an excessive amount of data becoming buffered in the network. Hence, if a change of video content is made, the new video content can be displayed more rapidly on the player as there is not much data still to be downloaded from the network to the player.

On the player side, for higher bandwidth networks, it can be possible for the player to rad an entire video clip from the server in a short period of time. For example, a 30s video clip could be streamed from the server to the phone in 5s. The excess video data is buffered in the player. If a change of video content is requested, e.g. to display a different video clip, then the server sends a clear buffers message to the video player before starting to stream the new video content data. On receipt of the clear buffers message, the player clears its internal buffers so that any new video data starts to play as soon as it is received. Hence, this avoids delays in changing the video being displayed, which would otherwise occur if new video were simply appended to the end of the players internal buffers, requiring the end of the previous video to be displayed before the new video is played.

The static video content is not limited to music videos, and in other embodiments the static video content can be pre-recorded films, television programs or content produced specifically for the platform. It will be appreciated that any video content that can be encoded and stored can be delivered by the invention. Also, interaction with the displayed video is not limited to merchandising. For example, the video content can include events on which bets can be placed, such as recorded footage of a horse race, cards game or roulette wheel, and the user can bet on the outcome of the event being shown via user interface entities for selecting an outcome and entering payment data, such as credit or charge card details.

As mentioned above, as well as allowing the user to interact with the displayed video by controlling the video content being displayed or selecting items of video content to be displayed, various other interactive functionalities can be incorporated by use of the messages and dialogues described above, to display user interface entities on the user device and acting on the user inputs.

Figure 22 shows a schematic block diagram of an interactive video platform according to a third embodiment of the invention. The third embodiment is generally similar to the first embodiment shown in Figure 1, except that the third embodiment includes further apparatus allowing an interactive video based game to be played on the users device.

The control server 112 can also operate to control a video based game being played on the user communication device. Alternatively, a separate game controller server 113, in communication with control server 112 over a local network, can handle some or all aspects of control of the game, based on commands and/or data sent from the control server 112.

Some of the streaming servers can supply live video content on which a game is based. A video camera 136 for capturing video content is connected to an encoder 138 which uses an H.264 codec to supply the compressed video data to live video streaming server 132. As will be appreciated in practice, the encoder 138 will be implemented in software on streaming server 128.

In an embodiment relating to a driving game, the system can include a wirelessly controllable vehicle 143 including a video camera 144. A wireless control unit 145 is in communication with the ARC server 112 and/or game controller server 113 and broadcasts control signals to control the movement of the vehicle 143. Video signals from the video camera 144 are broadcast to a wireless receiver 146, which supplied the live video signals to an encoder 148 connected to streaming server 128. Hence, vehicle 143 can be controlled during a game by user inputs and the live video captured by the moving vehicle can be displayed on the user device as the game is played.

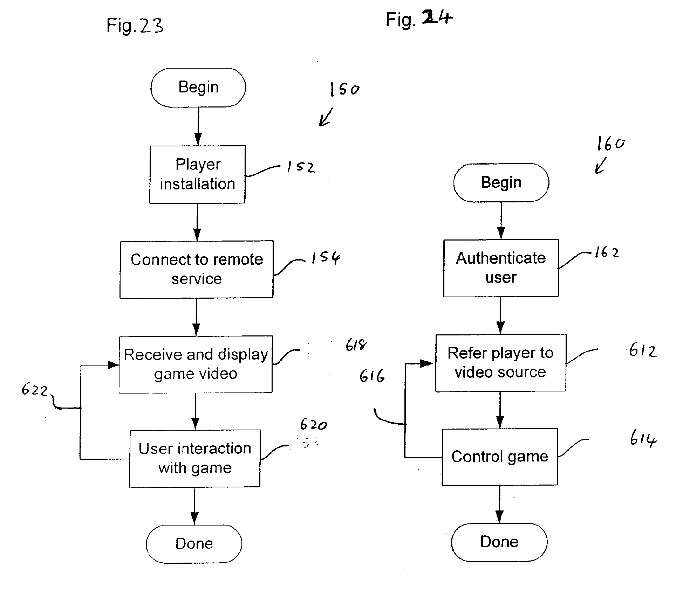

Figures 23 and 24 show processes carried out by the user device and on the platform respectively and are generally similar to Figures 2 and 3 except that they relate to interaction with a video based game.

The game to be played is selected by the user or can otherwise be identified. The database 114 includes a file for each game supported by the platform, and which identifies the control file 124 associated with the game, streaming servers which can act as the source of video content and also an .XML description file for configuring the user interface of the player on the remote user device. For the selected game, the referral module of the ARC server determines which streaming server will supply the video content and at step 612 re-directs the player application on the user's device to the appropriate streaming server.

The player is re-directed to connect to the streaming server which can deliver the live video content of the game. The XML control file 124 associated with the content is loaded on to the ARC server 112. The control file includes instructions indicating what action to carry out dependent on any key presses received at the ARC server and dependent on the time stamp of the video content at the time the key press was carried out.

At step 618, the player receives video data, decompresses it and displays live video to the user and any user interface elements generated by the control file. At step 620, when the user interacts with the game, e.g. by pressing a key while viewing the live video content, then the key press is intercepted and key press data is passed by the player to a socket on the ARC server using TCP and at step 614 the ARC server control module queries the XML control file to determine what action to take or method to invoke as a result of that key press. For example, the key press could correspond to an instruction to start or stop the game, control a part of the game, to select an option or to interact with user interface element either in the game or relating to the game. If a use interface element is to be displayed on the player during, or in relation to, the game then a character string is sent to the player which reads the string to determine how to configure and display the user interface element. In the latter case, the ARC server may call a payment processing module in the form of a plugin and pass the relevant parameters to the plugin to effect the credit card payment via an off-platform merchant server 142.

As well as the control server itself carrying out actions to control the game, the control server can send commands or data as input to the game controller server 113 and a game application running on the game server can provide further control of the game being played or can control other devices required to implement the game. In one embodiment, for example, the game can be a giant game of tetris, pac man or snake played using a tower block as the display device, wherein each window acts as a pixel and the game controller controls the lighting within each room having a window, to turn the lights on and off thereby causing the display pixels to be turned on and off. Hence game controller 113 can either act as the lighting controller for the building, or can communicate with a separate lighting controller to control the lights of the building and hence the game display. A video camera, e.g. camera 136, captures a live image of the building which is streamed to, and displayed by, the user device so that the user can view the game being played.

Depending on the game, at some stages, recorded video content can also be displayed and the recorded video content 126 is transferred to a streaming server for supply to the user device and the appropriate associated control file is loaded onto the ARC server, and streaming server if required, so that the user can interact with any recorded video portion of the game.

The user can continue to interact with the game, as represented by processing loop 622, and the control server continues to handle the actions invoked by the users key presses, as represented by processing loop 616, until the game ends or the user terminates the game or closes the player application.

As only key press data and character strings are being sent at the same time that the video is being streamed, the control data requires very little bandwidth and so does not significantly affect the quality of video being displayed.

The content and control files referred to generally herein will be understood to mean the video content corresponding to the game being played and the control file required to allow the game to be played.

Further interaction, and details thereof, between the user and platform is generally as described above with reference to Figures 4 to 18 with any modifications necessary to implement the embodiment illustrated in Figure 22 and as described further below.

An application of the interactive video platform in the control of a game including a live video component will now be described in the context of a giant game of snake played using the lights of a tower block. In this example, the user can interact with the game which is displayed on their mobile phone as live video being captured of the tower block. An example control file would be as follows:

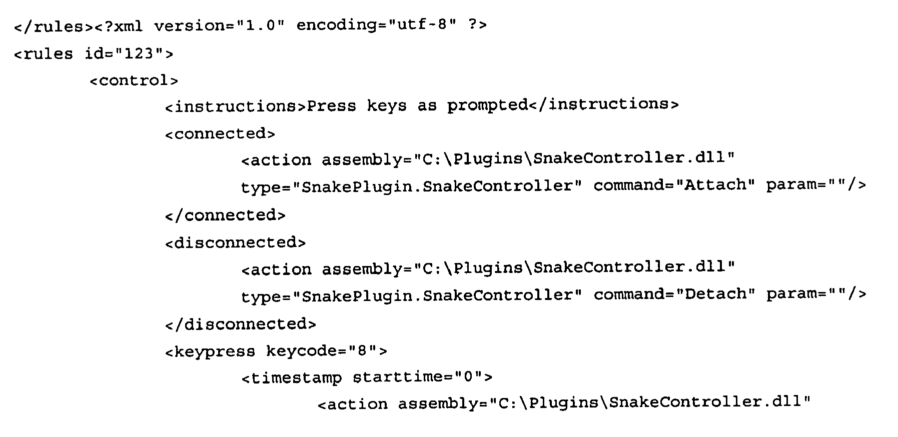

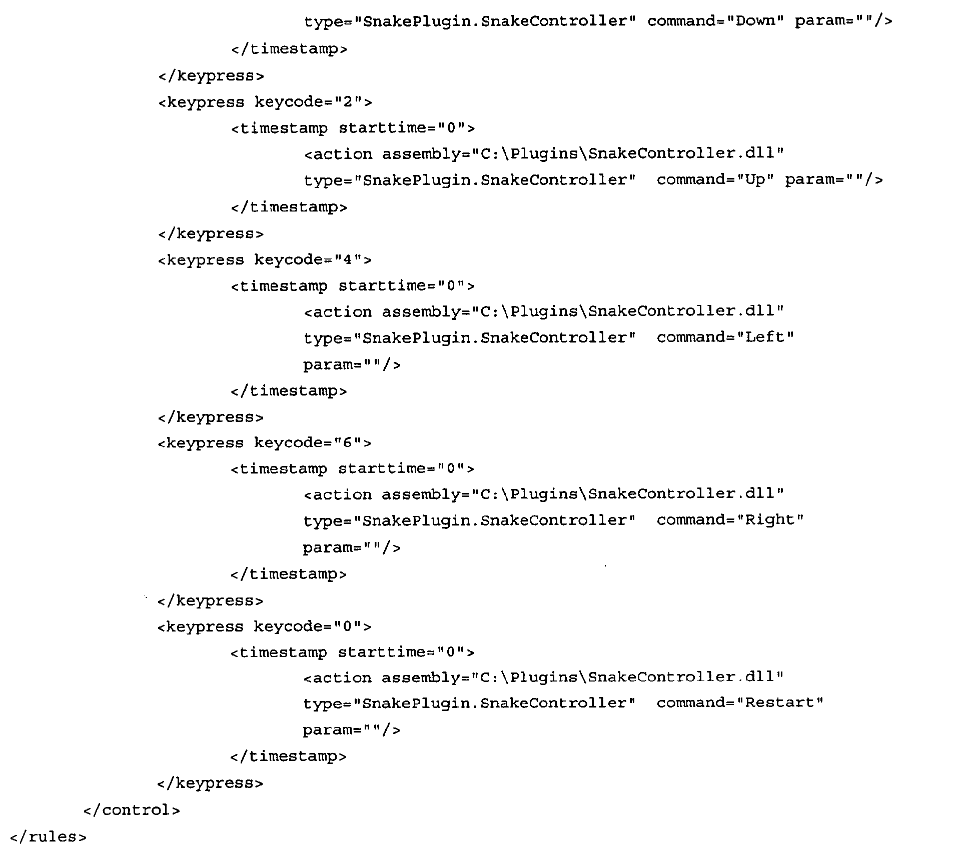

The user initially connects to the control server using the player and can enter a key press to select the game. The control server can either refer the user device to the streaming server to which the camera is connected or alternatively, the player can automatically connect to the appropriate streaming server after having sent a message to the control server notifying the control server that the user is going to connect to the streaming server, so that the control server can load the control file associated with the game and building camera.

The control node of the above control file causes various actions to be carried out depending on which key of the key pad of the users communication device are pressed. Initially an <instructions> node causes user instructions to be displayed to the user explaining what actions are caused by different keys. On connection to the streaming server, the <connection> node calls SnakePlugin.SnakeController at C:\Plugins\SnakeController.dll to execute command Attach so as to connect the streaming server to the live video stream from the building camera and the game begins automatically. If the 8 key is pressed at any time, then SnakePlugin.SnakeController is called to execute method Down which causes the snake to move down by providing input to the lighting controller to control the lights being turned on and off in the building. If the 2 key is pressed at any time, then SnakePlugin.SnakeController is called to execute method Up which causes the snake to move up in a similar manner. If the 4 key is pressed at any time, then SnakePlugin.SnakeController is called to execute method Left which causes the snake to move to the left and if the 6 key is pressed at any time then method MoveRight is executed to cause the snake to move right. Hence the user can control the game and is provided with live video feedback showing the effect of the users control of the game.

If the 0 key is pressed at any time, then SnakePlugin.SnakeController is called to execute a Restart method to restart the game. A <disconnect> node is also included causing a plugin to be called to disconnect the user device from the streaming server.

As will be appreciated, there are a wide number of games in which live video can be a component and in which further user interaction beyond simply controlling the game can be of benefit.

A further application would be to facilitate gambling by providing live video footage of a gambling event, a cards game, roulette, etc., and then allowing users to control an aspect of the gambling event video and place bets by using user interface entities to select what outcome to bet on, the odds and to receive payment data, such as credit or charge card details.

A further application would be a driving game as mentioned above. In this embodiment, the user can remotely control a vehicle carrying a video camera and the live video corresponding to the view from the vehicle is displayed on the users device, as the user drives the vehicle around a course using key presses. Multiple users can each have their own vehicle and hence different uses can race against each other in one embodiment. In other embodiments, the game can be a test of skill and as the user drives around a course, messages on the course can be captured by the video camera, such as a code, and the user can then enter the code into their user device and send it to the control server to win a prize.

Therefore, various different gaming applications of the interactive video platform of the present intention will be apparent in light of the foregoing description of the invention.

Generally, embodiments of the present invention, and in particular the processes carried out by the user device and by the ARC server employ various processes involving data stored in or transferred through one or more computer systems. Embodiments of the present invention also relate to an apparatus for performing these operations. This apparatus may be specially constructed for the required purposes, or it may be a general-purpose computer selectively activated or reconfigured by a computer program and/or data structure stored in the computer. The processes presented herein are not inherently related to any particular computer or other apparatus. In particular, various general-purpose machines may be used with programs written in accordance with the teachings herein, or it may be more convenient to construct a more specialized apparatus to perform the required method steps. A particular structure for a variety of these machines will appear from the description given below.

In addition, embodiments of the present invention relate to computer readable media or computer program products that include program instructions and/or data (including data structures) for performing various computer-implemented operations. Examples of computer-readable media include, but are not limited to, magnetic media such as hard disks, floppy disks, and magnetic tape; optical media such as CD-ROM disks; magnetooptical media; semiconductor memory devices, and hardware devices that are specially configured to store and perform program instructions, such as read-only memory devices (ROM) and random access memory (RAM). The data and program instructions of this invention may also be embodied on a carrier wave or other transport medium. Examples of program instructions include both machine code, such as produced by a compiler, and files containing higher level code that may be executed by the computer using an interpreter.

A typical computer or computer system that, when appropriately configured or designed, can serve as the user device or parts of the platform can include any number of processors (also referred to as central processing units, or CPUs) that are coupled to storage devices including a first primary storage (typically a random access memory, or RAM), a second primary storage (typically a read only memory, or ROM). The CPU may be of various types including microcontrollers and microprocessors such as programmable devices (e.g., CPLDs and FPGAs) and unprogrammable devices such as gate array ASICs or general purpose microprocessors. As is well known in the art, second primary storage acts to transfer data and instructions uni-directionally to the CPU and first primary storage is used typically to transfer data and instructions in a bi-directional manner. Both of these primary storage devices may include any suitable computer-readable media such as those described above. A mass storage device can also be coupled bi-directionally to CPU and provides additional data storage capacity and may include any of the computer-readable media described above. The ass storage device may be used to store programs, data and the like and is typically a secondary storage medium such as a hard disk. It will be appreciated that the information retained within the mass storage device, may, in appropriate cases, be incorporated in standard fashion as part of primary storage as virtual memory. A specific mass storage device may also be included such as a CD-ROM which may also pass data uni-directionally to the CPU.

The CPU can also be coupled to an interface that connects to one or more input/output devices such as such as video monitors, track balls, mice, keyboards, keypads, microphones, touch-sensitive displays, transducer card readers, magnetic or paper tape readers, tablets, styluses, voice or handwriting recognizers, or other well-known input devices such as, of course, other computers. Finally, the CPU optionally may be coupled to an external device such as a database or a computer or telecommunications network using an external connection, such as a network interface card. With such a connection, the CPU can receive information from the network, or can output information to the network in the course of performing the method steps described herein.

Although the above has generally described the present invention according to specific processes and apparatus, the present invention has a much broader range of applicability. The invention can be used in any application in which it would be beneficial for a user to control or cause an action based on video being displayed to a user. It will be appreciated that the process flow charts and architectures shown in the Figures are by way of illustration and explanation of the invention only and, unless the context requires otherwise, the specific details of the Figures should not be construed as limiting. For example, various combinations of data processing steps can be used and the order of the operations illustrated in the Figures can be altered and the operations can be broken down into sub-operations or combined into more general operations. One of ordinary skill in the art would recognize other variants, modifications and alternatives in light of the foregoing discussion.

## Claims

1. A computer implemented method for displaying interactive live video on a user device, comprising:
receiving encoded video over a network at the user device, the encoded video being from a source of live video;
sending a control command from the communication device over the network to control the source of live video so as to change a property of the video to be displayed to the user, the control command identifying an action to be carried out as specified in a control file associated with the video being received; and
receiving encoded video over the network at the user device; and
decoding the encoded video and displaying live video different to the live video initially being sent to the user device.

2. The method of claim 1, wherein the property is an aspect of the video being displayed.

3. The method of claim 1, wherein the property is the source of live video to be displayed.

4. The method of any of claims 1 to 3, wherein the control command includes a key pressed by the user and/or the time at which the key was pressed by the user.

5. An interactive video platform for providing interactive live video on a user device over a network, the interactive video platform being configured by computer program code to:
send encoded video over a network to the user device, the encoded video being from a source of live video;
receive a control command from the communication device over the network;
read a control file associated with the live video being sent to determine an action to be carried out in response to the control command received;
cause the action to be carried out to control the source of live video so as to change a property of the video to be displayed to the user; and
send encoded video over the network to the user device, the encoded video being different to the live video initially being sent to the user device.

6. The platform as claimed in claim 5, and further comprising a streaming server in communication with the network for streaming encoded live video data over the network.

7. The platform as claimed in claim 5, and further comprising a source of live video content.

8. The platform of claim 7, wherein the source of live video content is a video camera.

9. The platform of claim 7, wherein the source of live video content is a live television feed.

10. The platform as claimed in any of claims 5 to 9, and further comprising a control file for each different type of live video or item of live video.

11. A user communication device for displaying interactive live video, comprising a display and an interactive video player implemented by a data processor configured by computer program code to:
receive encoded video over a network at the user device, the encoded video being from a source of live video;
send a control command from the communication device over the network to control the source of live video so as to change a property of the video to be displayed to the user, the control command identifying an action to be carried out as specified in a control file associated with the received video; and
receive encoded video over the network at the user device; and
decode the encoded video and display live video different to the live video initially being sent to the user device.

12. A computer implemented method for displaying interactive video on a user communication device, comprising:
receiving encoded video data from a source of recorded video content over a network;
decoding the video data and displaying the video content;
sending a control command from the communication device over the network to control a property of the video to be displayed to the user, the control command identifying an action to be carried out as specified in a control file associated with the video being received; and
receiving encoded video data and decoding and displaying video having the property controlled as specified by the sent control command.

13. The method as claimed in claim 12, wherein the property is an aspect of how the video content is being displayed.

14. The method as claimed in claim 12, wherein the property is the item of video content to be displayed on the user device.

15. The method as claimed in any of claims 12 to 14, further comprising displaying a user interface entity with the video being displayed.

16. The method as claimed in claim 15, further comprising;
receiving further user key press input responsive to the user interface entity; and
sending user input data including at least the further key press data or an alphanumeric string over the network to the controller.

17. The method as claimed in any of claims 12 to 16, and further comprising:
receiving connection data over the network identifying the source of video content; and
connecting the user device to the source of video content over the network, using the connection data.

18. An interactive video platform for providing interactive video on a user device over a network, the interactive video platform being configured by computer program code to:
identify an item of recorded video content to be displayed on the user device;
determine a control file associated with the item of recorded video content;
receive a control command from the user device while the video content is being displayed on the user device, the control command controlling a property of the video to be displayed on the user device;
read the control file to determine an action to carry out to control the video being displayed on the user device based on the control command received; and
cause the action to be carried out so as to control the property of the recorded video being displayed on the user device.

19. The platform as claimed in claim 18, and further comprising a plurality of streaming servers in communication with the network for streaming encoded video data over the network.

20. The platform as claimed in 18 or 19, and further comprising a store of a plurality of different items of recorded encoded video content.

21. The platform as claimed in claim 20, and further comprising a control file for each different item of video content.

22. The platform as claimed in claim 19, wherein some of the plurality of streaming servers are local to a control server and the rest are not local to the control server.

23. The platform as claimed in claim 21, wherein each streaming server has access to the control files associated with the items of video content that an individual streaming server can supply.

24. A user communication device for displaying interactive video, comprising a display and an interactive video player implemented by a data processor configured by computer program code to:
receive encoded video data from a source of recorded video content over a network;
decode the video data and displaying the video content;
send a control command from the communication device over the network to control a property of the video to be displayed to the user, the control command identifying an action to be carried out as specified in a control file associated with the video being received; and
receive encoded video data and decode and display video having the property controlled as specified by the sent control command.

25. A computer implemented method for playing an interactive game including live video on a user device, comprising:
receiving live video from a source of live video over a network at the user device;
sending a control command from the communication device over the network to control the game, the control command identifying an action to be carried out as specified in a control file associated with the video being received;
receiving further live video over the network at the user device, the further live video including the effect of the control command on the game.

26. The method of claim 25, wherein the control command causes a property of the video being displayed to be changed.

27. The method of claim 25 or 26, wherein the control command includes a key pressed by the user and/or the time at which the key was pressed by the user.

28. The method of any of claims 25 to 27, further comprising:
receiving a message defining the content and format of a user interface entity; and
displaying the user interface entity.

29. An interactive video platform for providing an interactive game including live video on a user device over a network, the interactive video platform being configured by computer program code to:
send live video from a source of live video over a network to the user device;
receive a control command from the user device over the network, the control command controlling a game being played on the user device;
read a control file associated with the live video being sent to determine an action to be carried out in response to the control command received;
cause the action to be carried out to control the game; and
send further live video over the network to the user device, the further live video including the effect of the control command on the game.

30. The platform as claimed in claim 29, and further comprising a streaming server in communication with the network for streaming encoded live video data over the network.

31. The platform as claimed in claim 30, and further comprising a source of live video content.

32. The method of claim 30, wherein the source of live video content is a video camera.

33. The platform as claimed in any of claims 28 to 32, and further comprising a control file for each of a plurality of different types of interactive game.

34. A user communication device for playing an interactive game including live video, comprising a display and an interactive video player implemented by a data processor configured by computer program code to:
receive live video from a source of live video over a network at the user device;
send a control command from the communication device over the network to control the game, the control command identifying an action to be carried out as specified in a control file associated with the video being received;
receive further live video over the network at the user device, the further live video including the effect of the control command on the game.

35. Computer program code executable by a data processing device or devices to provide the method of any of claims 1 to 4, 12 to 17 or 24 to 28 or the platform of any of claims 5 to 10, 18 to 23 or 29 to 34 or the device of any of claims 11, 24 or 33.

36. A computer program product, comprising a computer readable medium bearing computer program code as claimed in claim 35.
